(19) Europäisches Patentamt / European Patent Office / Office européen des brevets

(11) **EP 4 024 281 A1**

(12) **EUROPEAN PATENT APPLICATION**
published in accordance with Art. 153(4) EPC

(43) Date of publication:
06.07.2022 Bulletin 2022/27

(21) Application number: 20856760.2

(22) Date of filing: 31.03.2020

(51) International Patent Classification (IPC):
*G06N 3/04* (2006.01)     *G06N 20/00* (2019.01)
*G06N 3/063* (2006.01)

(52) Cooperative Patent Classification (CPC):
G06N 3/04; G06N 3/063; G06N 20/00

(86) International application number:
PCT/CN2020/082610

(87) International publication number:
WO 2021/036255 (04.03.2021 Gazette 2021/09)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.08.2019  CN 201910792847
28.08.2019  CN 201910804618
28.08.2019  CN 201910804625

(71) Applicant: Shanghai Cambricon Information
Technology Co., Ltd
Shanghai 201306 (CN)

(72) Inventors:
• ZHANG, Yao
Shanghai 201306 (CN)

• JIANG, Guang
Shanghai 201306 (CN)
• ZHANG, Xishan
Shanghai 201306 (CN)
• ZHOU, Shiyi
Shanghai 201306 (CN)
• HUANG, Di
Shanghai 201306 (CN)
• LIU, Chang
Shanghai 201306 (CN)
• GUO, Jiaming
Shanghai 201306 (CN)

(74) Representative: Boult Wade Tennant LLP
Salisbury Square House
8 Salisbury Square
London EC4Y 8AP (GB)

(54) **METHOD AND APPARATUS FOR PROCESSING DATA, AND RELATED PRODUCT**

(57)     Embodiments of the present disclosure relate to a method and an apparatus for processing data, and related products. The embodiments of the present disclosure relate to a board card, which includes a storage component, an interface apparatus, a control component, and an artificial intelligence chip. The artificial intelligence chip is connected to the storage component, the control component, and the interface apparatus respectively. The storage component is used to store data, the interface apparatus is used to realize data transmission between the artificial intelligence chip and an external device; and the control component is used to monitor a state of the artificial intelligence chip. The board card may be used to perform artificial intelligence computations.

FIGURE 1-1

**Description**

**TECHNICAL FIELD**

Embodiments of the present disclosure relate to the technical field of computer technology, and specifically to a method and an apparatus for processing data, and related products.

**BACKGROUND**

With continuous development, artificial intelligence technology is applied in more and more extensive fields, and has been well applied in fields of image recognition, speech recognition, natural language processing, and the like. However, as the complexity and accuracy of artificial intelligence algorithms increase, machine learning models are getting larger and larger, and the number of data that needs to be processed is also getting larger. When a large number of data is processed, large calculation and time overhead are required, and the processing efficiency is low.

**SUMMARY**

In view of this, the embodiments of the present disclosure provide a method and an apparatus for processing data, and related products.

According to a first aspect of the present disclosure, a method for processing data is provided. The method includes: obtaining a group of data to be quantized for a machine learning model; quantizing the group of data to be quantized respectively through using a plurality of pairs of truncation thresholds to determine a plurality of groups of quantized data, where each pair of truncation thresholds in the plurality of pairs of truncation thresholds includes a truncation positive value and a truncation negative value that are symmetrical; and selecting a pair of truncation thresholds from the plurality of pairs of truncation thresholds to quantize a group of data to be quantized based on a difference between a mean value of an absolute value of each group of quantized data in the plurality of groups of quantized data and a mean value of an absolute value of the group of data to be quantized to quantize the group of data to be quantized.

A second aspect of the present disclosure provides an apparatus for processing data. The apparatus includes: a data to be quantized obtaining unit, a quantized data determining unit, and a truncation threshold selecting unit. The data to be quantized obtaining unit is configured to obtain a group of data to be quantized for a machine learning model. The quantized data selecting unit is configured to quantize the group of data to be quantized respectively through using a plurality of pairs of truncation thresholds to determine a plurality of groups of quantized data, where each pair of truncation threshold in the plurality of pairs of truncation thresholds includes a truncation positive value and a truncation negative value that are symmetrical. The truncation thresholds determining unit is configured to select a pair of truncation thresholds from a plurality of pairs of truncation thresholds to quantize a group of data to be quantized based on a difference between a mean value of an absolute value of each group of quantized data in the plurality of groups of quantized data and a mean value of an absolute value of the group of data to be quantized.

A third aspect of the present disclosure provides a computer readable storage medium, which stores a computer program. When the computer program is executed, the method of each embodiment according to the present disclosure is implemented.

A fourth aspect of the present disclosure provides an artificial intelligence chip, which includes an apparatus for processing data according to various embodiments of the present disclosure.

A fifth aspect of the present disclosure provides an electronic device, which includes the artificial intelligence chip according to various embodiments of the present disclosure.

A sixth aspect of the present disclosure provides a board card, which includes a storage component, an interface apparatus, a control component, and the artificial intelligence chip according to various embodiments of the present disclosure. The artificial intelligence chip is connected to the storage component, the control component, and the interface apparatus respectively; the storage component is configured to store data; the interface apparatus is configured to implement data transfer between the artificial intelligence chip and an external device; and the control component is configured to monitor a state of the artificial intelligence chip.

Through the derivation of the technical features in the claims, the technical effect of the technical problems in the background may be achieved. According to the following detailed description of exemplary embodiments with reference to the drawings, other features and aspects of the present disclosure may become clear.

In view of this, the embodiments of the present disclosure provide a method and an apparatus for processing data, and related products.

According to a first aspect of the present disclosure, a method for processing data is provided. The method includes: obtaining a group of data to be quantized for a machine learning model; quantizing the group of data to be quantized respectively through using a plurality of pairs of truncation thresholds to determine a plurality of groups of quantized data, where each pair of truncation thresholds in the plurality of pairs of truncation thresholds includes an upper truncation and a lower truncation, and the upper truncation and the lower truncation in at least one pair of truncation thresholds in the plurality of pairs of truncation thresholds have different absolute values; and selecting a pair of truncation thresholds from the plurality of pairs of truncation thresholds to quantize the group of data to be quantized based on a difference between a mean value of an absolute value of each group of quantized data in the plurality of groups of quantized data and a mean value of an absolute value of the group of the data to be quantized.

A second aspect of the present disclosure provides an apparatus for processing data. The apparatus includes: a data to be quantized obtaining unit, a quantized data determining unit, and a truncation threshold selecting unit. The data to be quantized obtaining unit is configured to obtain a group of data to be quantized for a machine learning model. The quantized data determining unit is configured to quantize the group of data to be quantized respectively through using a plurality of pairs of truncation thresholds to determine a plurality of groups of quantized data, where each pair of truncation threshold in the plurality of pairs of truncation thresholds includes an upper truncation and a lower truncation, and the upper truncation and the lower truncation in at least one pair of truncation thresholds in the plurality of pairs of truncation thresholds have different absolute values. The truncation thresholds selecting unit is configured to select a pair of truncation thresholds from a plurality of pairs of truncation thresholds to quantize a group of data to be quantized based on a difference between a mean value of an absolute value of each group of quantized data in the plurality of groups of quantized data and a mean value of an absolute value of the group of data to be quantized.

A third aspect of the present disclosure provides a computer readable storage medium, on which a computer program is stored, and when the computer program is executed, the method of each embodiment according to the present disclosure is implemented.

A fourth aspect of the present disclosure provides an artificial intelligence chip, which includes an apparatus for processing data according to various embodiments of the present disclosure.

A fifth aspect of the present disclosure provides an electronic device, which includes the artificial intelligence chip according to various embodiments of the present disclosure.

A sixth aspect of the present disclosure provides a board card, which includes a storage component, an interface apparatus, a control component, and the artificial intelligence chip according to various embodiments of the present disclosure. The artificial intelligence chip is connected to the storage component, the control component, and the interface apparatus respectively; the storage component is configured to store data; the interface apparatus is configured to implement data transfer between the artificial intelligence chip and an external device; and the control component is configured to monitor a state of the artificial intelligence chip.

Through the derivation of the technical features in the claims, the technical effect of the technical problems in the background may be achieved. According to the following detailed description of exemplary embodiments with reference to the drawings, other features and aspects of the present disclosure may become clear.

In view of this, the present disclosure provides a method and an apparatus for processing data and related products.

According to a first aspect of the present disclosure, a method for processing data is provided. The method includes obtaining a plurality of pieces of data for a machine learning model, where the data is represented in a first data format. The method further includes distributing the plurality of pieces of data in a first group of intervals based on values of the plurality of pieces of data, where the number of the first group of intervals is predetermined. The method also includes determining a first average value of the plurality of pieces of data. The method also includes mapping the data distributed in the first group of intervals to a second group of intervals according to a plurality of different mapping units for determining a second average value of the mapped data according to the corresponding mapping units, where the mapping units include a predetermined number of continuous intervals starting from a first interval of the first group of intervals, an end interval of the mapping units is distributed with data larger than or located in the end interval among the plurality of pieces of data, and the number of intervals in the second group of intervals is relative to a second data format, and the accuracy of the second data format is lower than that of the first data format. The method further includes processing the plurality of pieces of data based on the first average value and a plurality of second average values, so that the processed plurality of pieces of data is represented in the second data format.

According to a second aspect of the present disclosure, an apparatus for processing data is provided. The apparatus includes an obtaining unit, a distribution unit, a first average value determining unit, a first mapping unit, and an execution unit. The obtaining unit is configured to obtain a plurality of pieces of data for a machine learning model, and the data is represented in a first data format. The distribution unit is configured to distribute the plurality of pieces of data to the first group of intervals based on the values of the plurality of pieces of data, and the number of the first group of intervals is predetermined. The first average value determining unit is configured to determine the first average value of the data. The first mapping unit is configured to map the data distributed in the first group of intervals to the second group of intervals according to a plurality of different mapping units to determine the second average value of the mapped data according to the corresponding mapping unit, where the mapping unit includes a predetermined number of consecutive intervals starting from the first interval of the first group of intervals, and the end interval of the mapping unit is distributed with the plurality of pieces of data that is larger than or located in the end interval. The number of intervals in the second group of intervals is related to the second data format, and the accuracy of the second data format is lower than the first data format. The execution unit is configured to process the plurality of pieces of data based on the first average value and the plurality of second average values, so that the plurality of processed data is expressed in the second data format.

According to a third aspect of the present disclosure, an artificial intelligence chip is provided. The artificial intelligence chip includes a processor and a memory, where the memory stores computer program instructions, and the processor runs the computer program instructions in the memory to control the artificial intelligence chip to execute the method according to the first aspect.

According to a fourth aspect of the present disclosure, an electronic device is provided. The electronic device is the artificial intelligence chip described in the third aspect of the present disclosure.

According to a fifth aspect of the present disclosure, a board card is provided. The board card includes a storage component, an interface apparatus, a control component, and the artificial intelligence chip. The artificial intelligence chip is connected to the storage component, the control component, and the interface apparatus respectively. The storage component is used to store data; the interface apparatus is used to realize data transmission between the artificial intelligence chip and an external device. The control component is used to monitor a state of the artificial intelligence chip.

Through the derivation of the technical features in the claims, the technical effect of the technical problems in the background may be achieved. According to the following detailed description of exemplary embodiments with reference to the drawings, other features and aspects of the present disclosure may become clear.

## BRIEF DESCRIPTION OF THE DRAWINGS

The drawings are included in the specification and constitute a part of the specification. Together with the specification, the drawings illustrate exemplary embodiments, features, and aspects of the present disclosure, and are used to explain principles of the present disclosure.

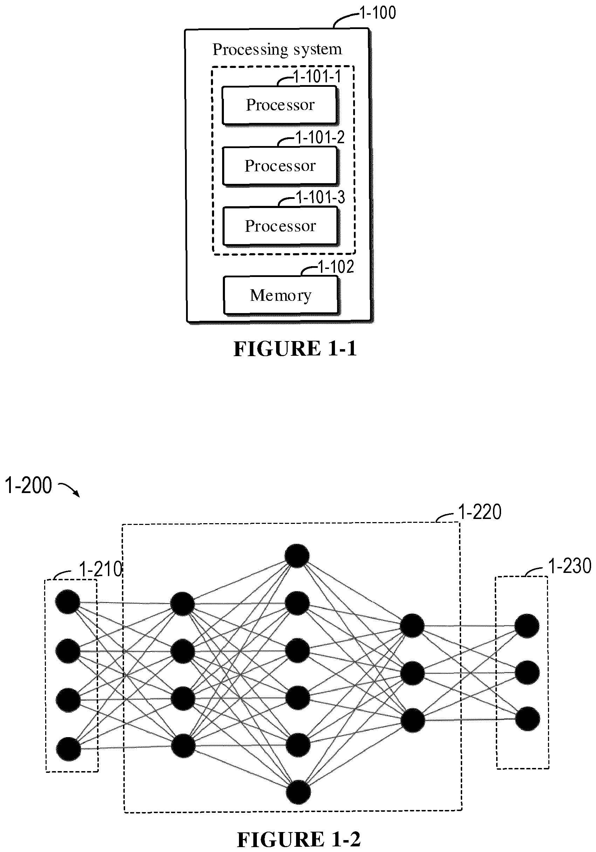

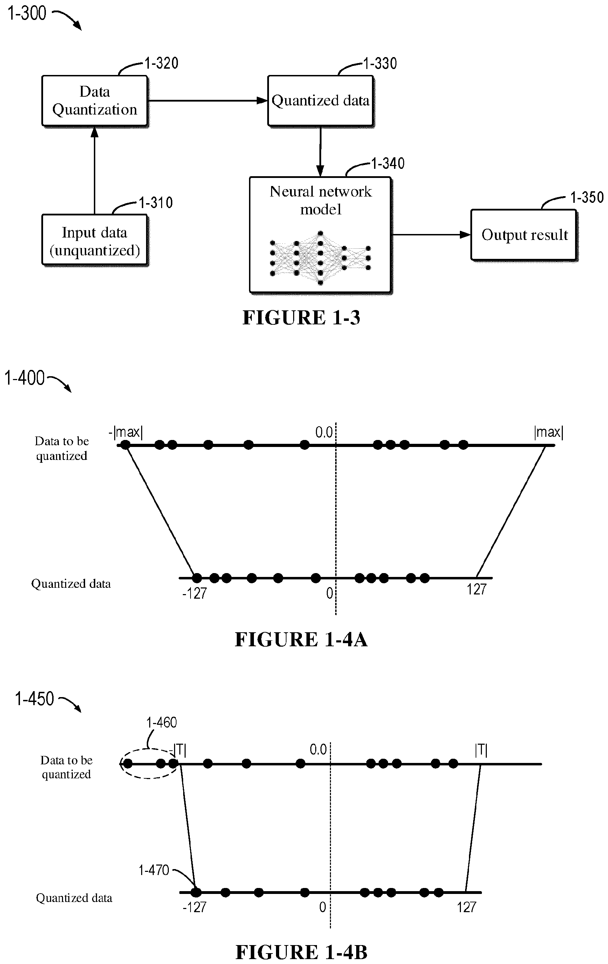

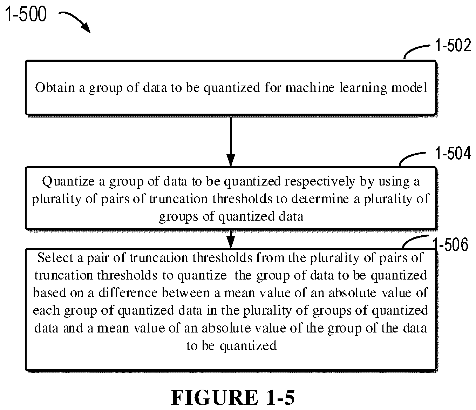

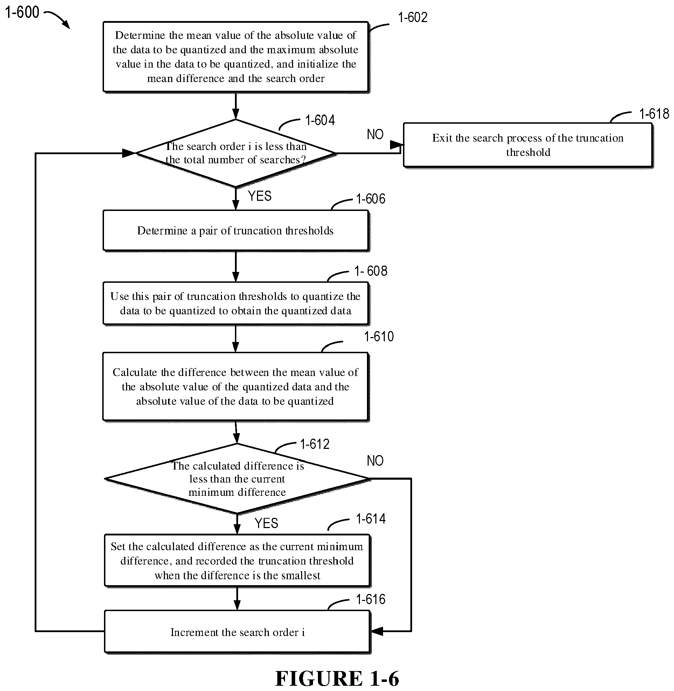

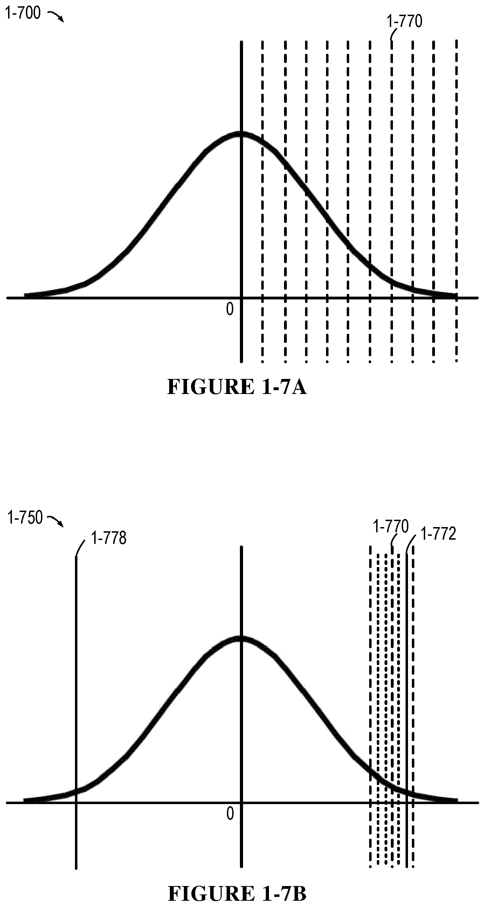

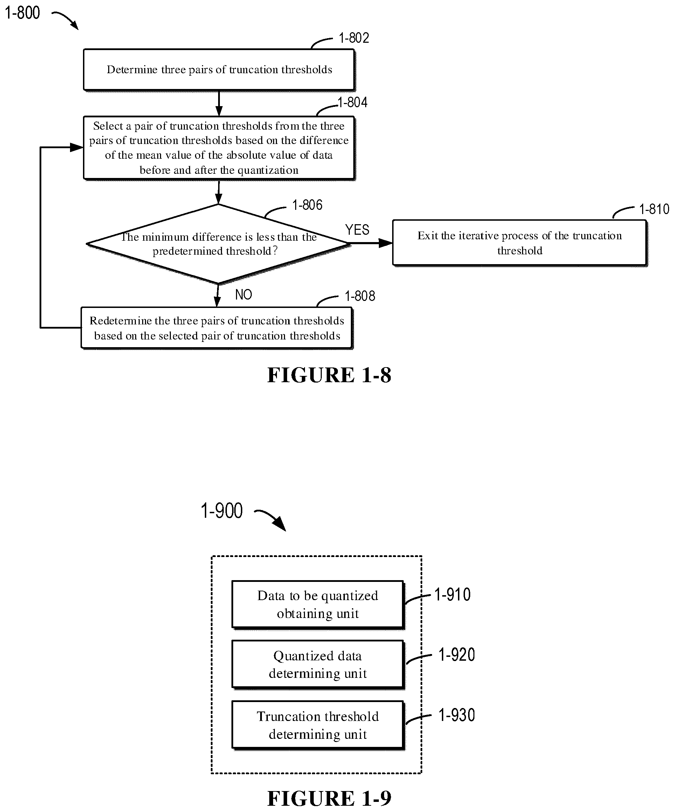

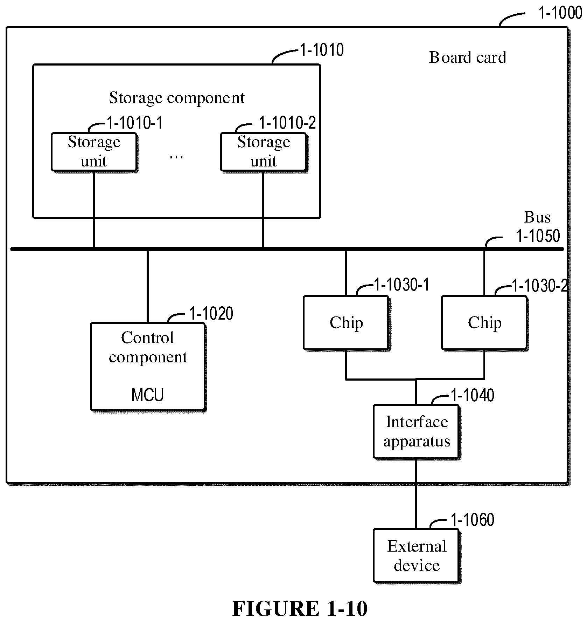

FIG. 1- 1 is a schematic diagram of a processing system configured to implement a method for processing data according to an embodiment of the present disclosure;

FIG. 1- 2 is a schematic diagram of an exemplary architecture of a neural network according to an embodiment of the present disclosure.

FIG. 1- 3 is a schematic diagram of a process for data quantization according to an embodiment of the present disclosure;

FIG. 1-4A is a schematic diagram for quantizing data symmetrically according to an embodiment of the present disclosure.

FIG. 1-4B is a schematic diagram for quantizing data symmetrically based on truncation thresholds according to an embodiment of the present disclosure.

FIG. 1- 5 is a flowchart of a method for processing data according to an embodiment of the present disclosure;

FIG. 1- 6 is a flowchart of a method for searching truncation thresholds used for symmetric quantization according to an embodiment of the present disclosure.

FIG. 1-7A is a schematic diagram for searching for truncation thresholds for symmetric quantization in a coarse-grained manner according to an embodiment of the present disclosure.

FIG. 1-7B is a schematic diagram for searching for truncation thresholds used for symmetric quantization in a fine-grained manner according to an embodiment of the present disclosure.

FIG. 1- 8 is a flowchart of a method for iteratively searching for an optimal truncation threshold according to an embodiment of the present disclosure.

FIG. 1- 9 is a diagram of an apparatus for processing data according to an embodiment of the present disclosure; and

FIG. 1- 10 is a structural diagram of a board card according to an embodiment of the present disclosure.

FIG. 1- 1 is a schematic diagram of a processing system configured to implement a method for data processing according to an embodiment of the present disclosure;

FIG. 2- 2 is a schematic diagram of an exemplary architecture of a neural network according to an embodiment of the present disclosure.

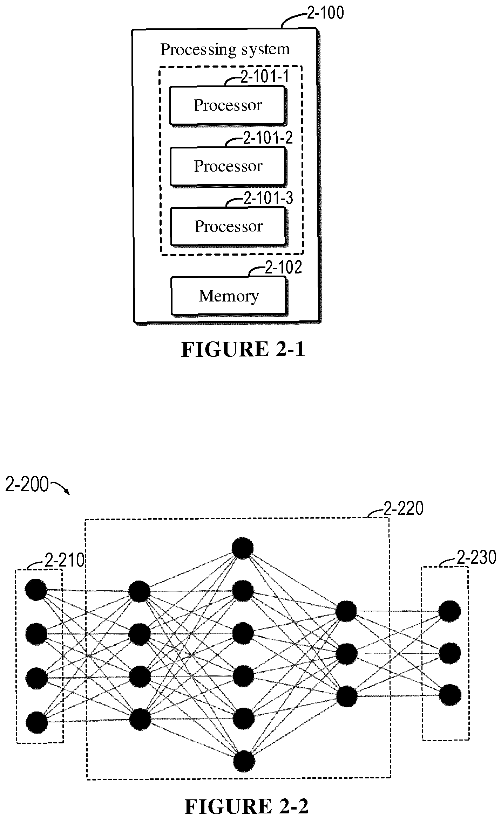

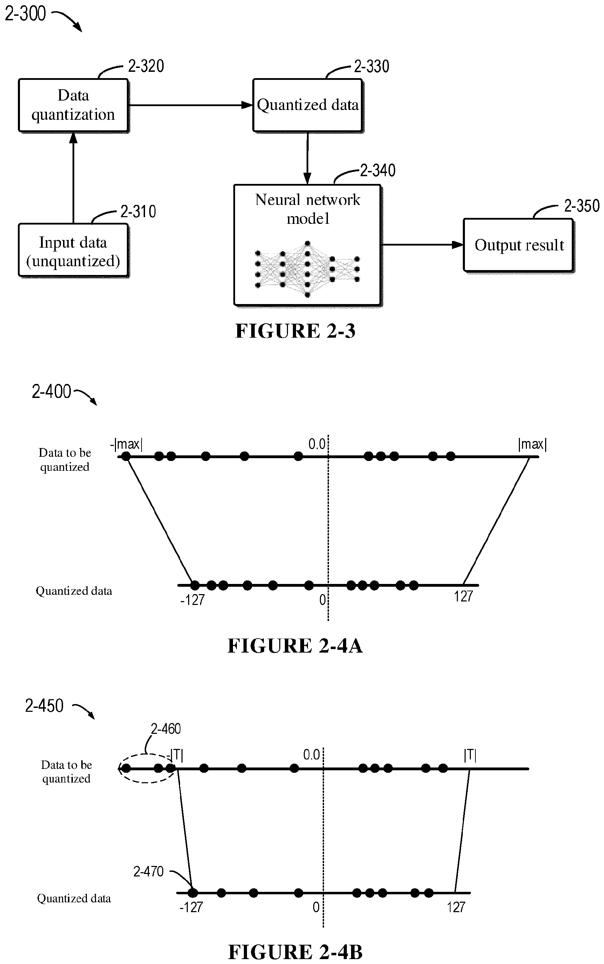

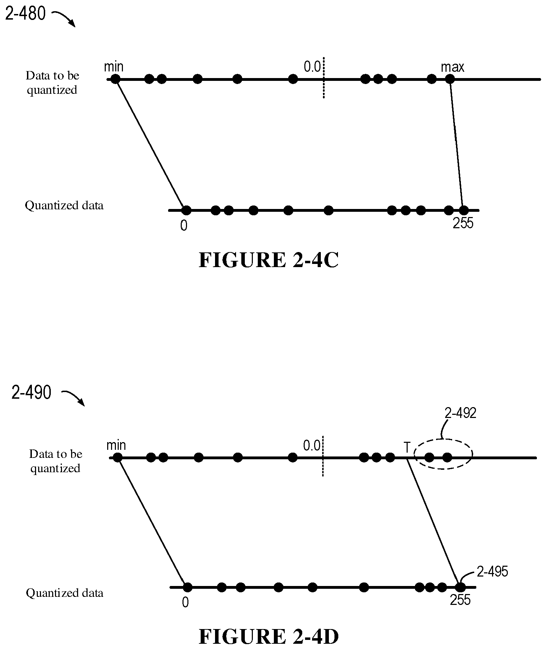

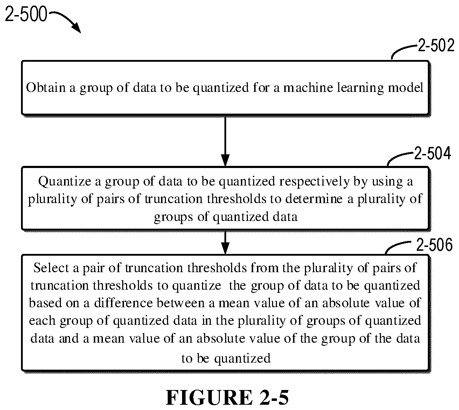

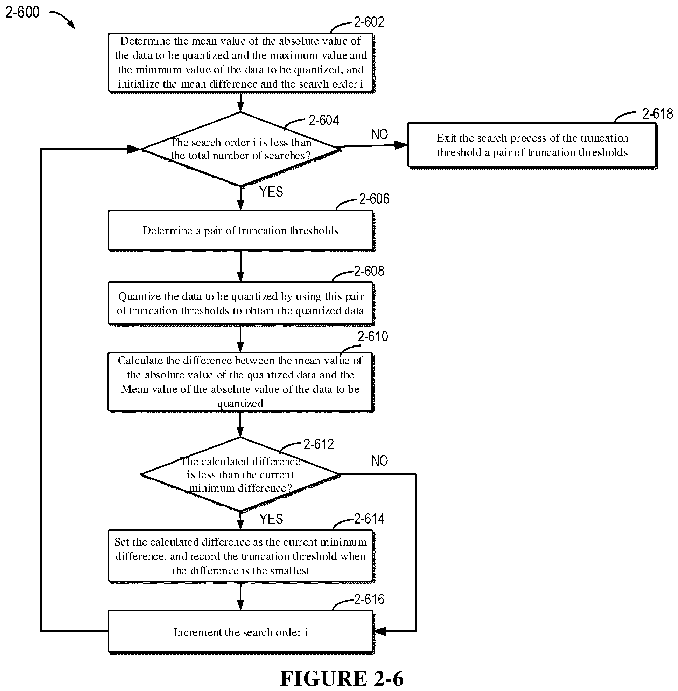

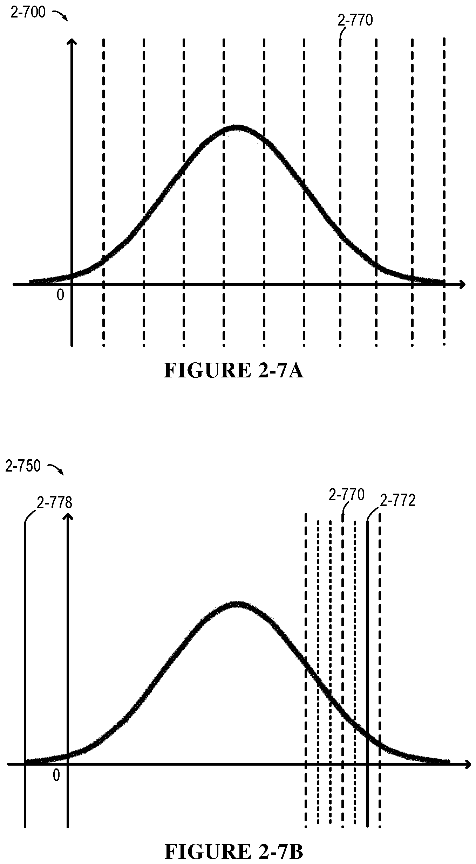

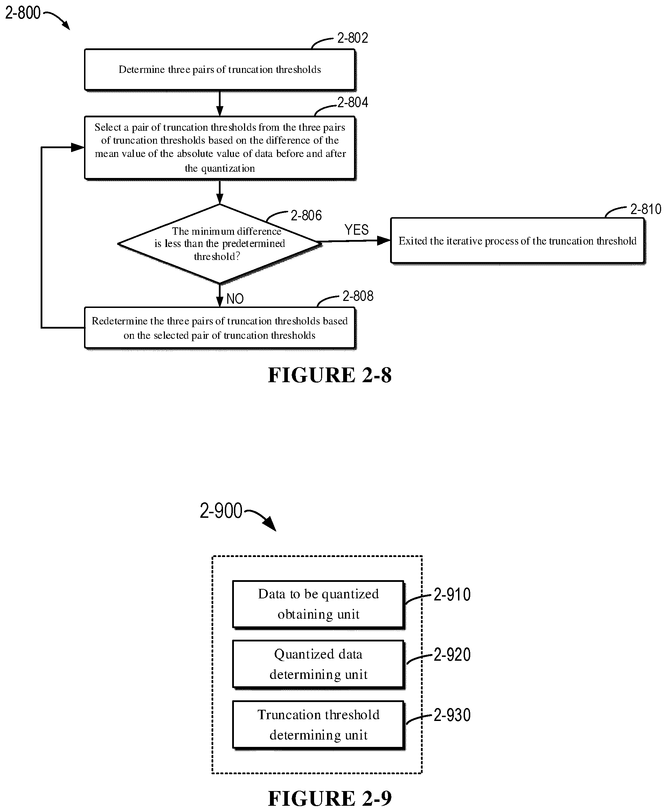

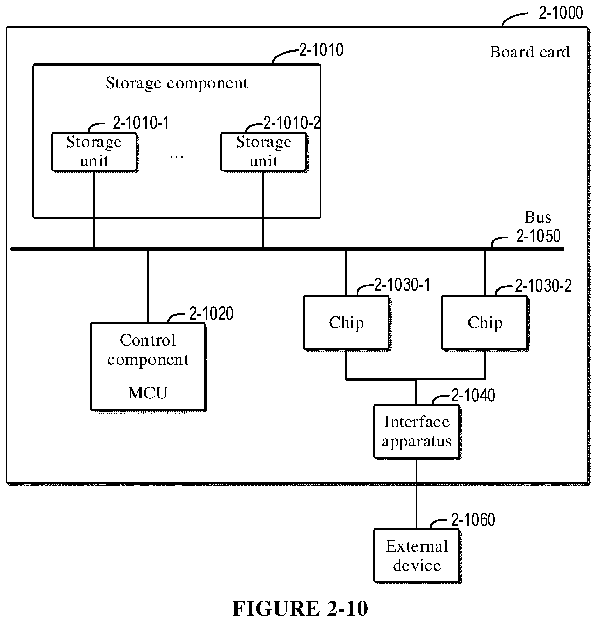

FIG. 2- 3 is a schematic diagram of a process for data quantization according to an embodiment of the present disclosure;

FIG. 2-4A is a schematic diagram for quantizing data symmetrically according to an embodiment of the present disclosure.

FIG. 2-4B is a schematic diagram for quantizing data symmetrically based on truncation thresholds according to an embodiment of the present disclosure.

FIG. 2-4C is a schematic diagram for quantizing data asymmetrically according to an embodiment of the present disclosure.

FIG. 2-4D is a schematic diagram for quantizing data asymmetrically based on truncation thresholds according to an embodiment of the present disclosure.

FIG. 2- 5 is a flowchart of a method for processing data according to an embodiment of the present disclosure;

FIG. 2- 6 is a flowchart of a method for searching truncation thresholds used for asymmetric quantization according to an embodiment of the present disclosure.

FIG. 2-7A is a schematic diagram for searching for truncation thresholds used for asymmetric quantization in a coarse-grained manner according to an embodiment of the present disclosure.

FIG. 2-7B is a schematic diagram for searching for truncation thresholds used for asymmetric quantization in a fine-grained manner according to an embodiment of the present disclosure.

FIG. 2- 8 is a flowchart of a method for iteratively searching for an optimal truncation threshold according to an embodiment of the present disclosure.

FIG. 2- 9 is a diagram of an apparatus for processing data according to an embodiment of the present disclosure; and

FIG. 2- 10 is a structural diagram of a board card according to an embodiment of the present disclosure.

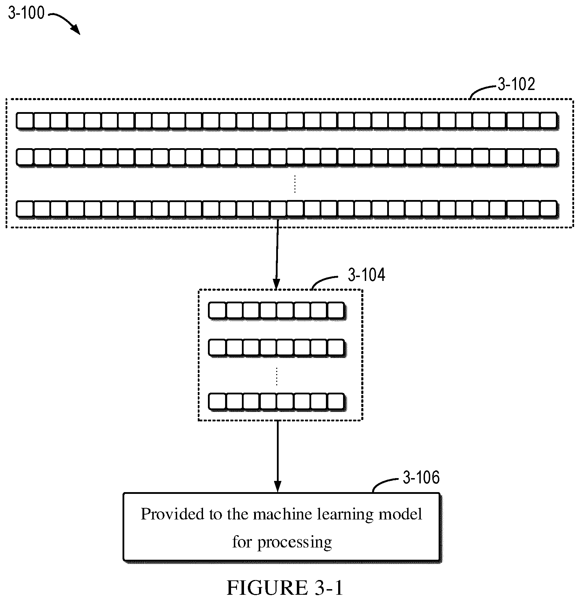

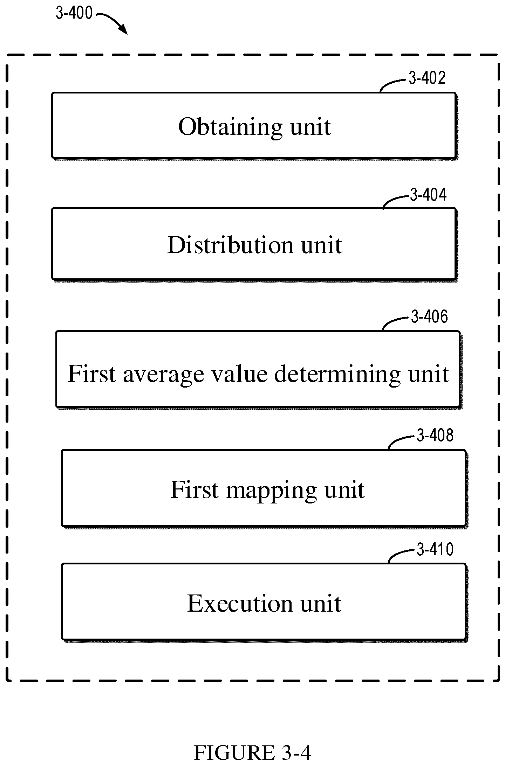

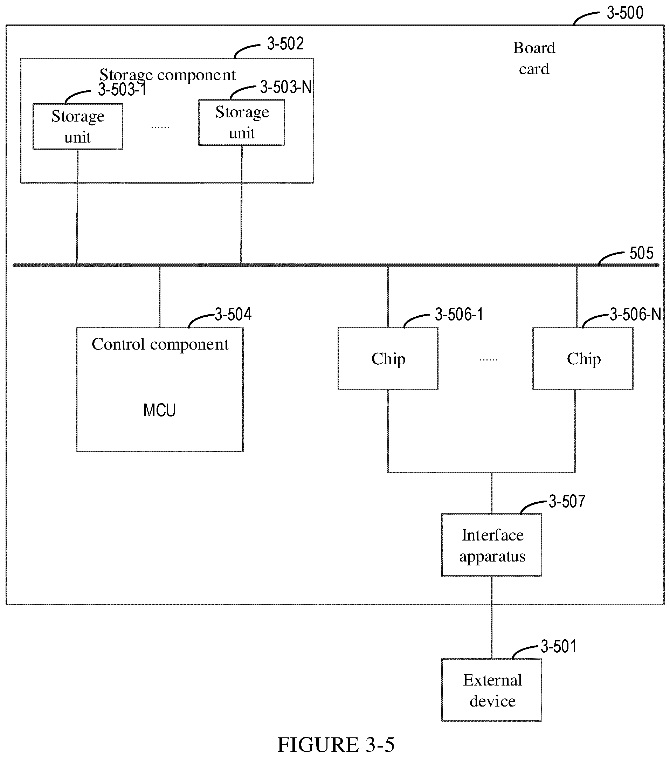

FIG. 3- 1 illustrates a schematic diagram of an example environment 100 in which a device and/or a method according to embodiments of the present disclosure may be implemented.

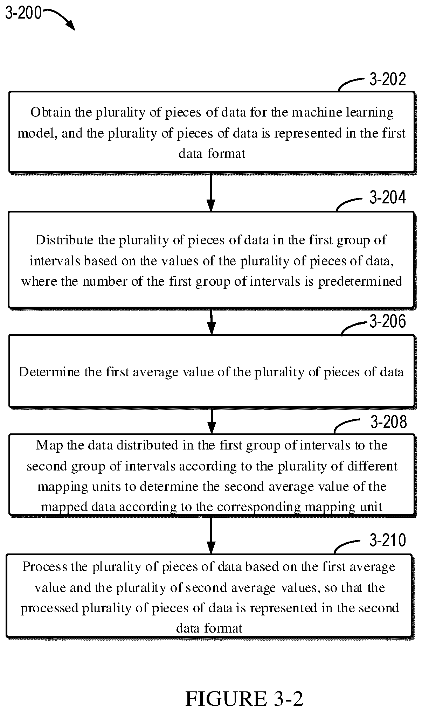

FIG. 3- 2 illustrates a flowchart of a process 200 for processing data according to an embodiment of the present disclosure;

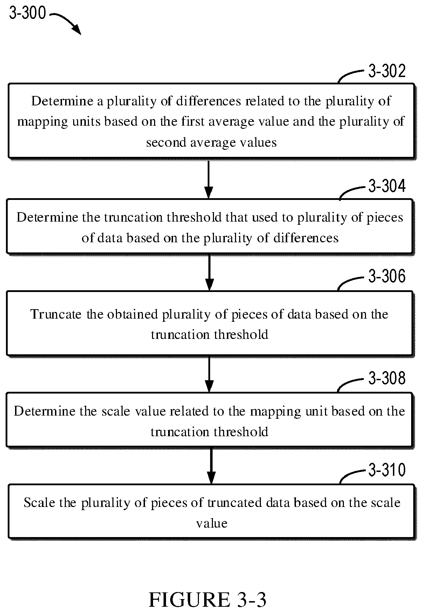

FIG. 3- 3 illustrates a flowchart of a process 300 for processing data according to an embodiment of the present disclosure;

FIG. 3- 4 illustrates a structural diagram of an apparatus 400 for processing data according to an embodiment of the present disclosure.

FIG. 3- 5 illustrates a structural diagram of a board card 500 according to an embodiment of the present disclosure.

## DETAILED DESCRIPTION OF THE EMBODIMENTS

Technical solutions in embodiments of the present disclosure will be described clearly and completely hereinafter with reference to the drawings in the embodiments of the present disclosure. Obviously, the embodiments to be described are merely some of, but not all of embodiments of the present disclosure. All other embodiments obtained by those of ordinary skill in the art based on the embodiments of the present disclosure without creative efforts shall fall within the protection scope of the present disclosure.

It should be understood that terms such as "first", "second", "third", and "fourth" in the claims, the specification, and drawings are used for distinguishing different objects rather than describing a specific order. It should be understood that terms "including" and "comprising" used in the specification and the claims indicate the presence of a feature, an entity, a step, an operation, an element, and/or a component, but do not exclude the existence or addition of one or more other features, entities, steps, operations, elements, components, and/or collections thereof.

It should also be understood that the terms used in the specification of the present disclosure are merely for the purpose of describing particular embodiment rather than limiting the present disclosure. As being used in the specification and the claims of the disclosure, unless the context clearly indicates otherwise, the singular forms "a", "an" and "the" are intended to include the plural forms. It should also be understood that the term "and/or" used in the specification and the claims refers to any or all possible combinations of one or more of relevant listed items and includes these combinations.

As being used in this specification and the claim, the term "if' may be interpreted as "when", or "once" or "in response to a determination" or "in response to a case where something is detected" depending on the context. Similarly, depending on the context, the clause "if it is determined that" or "if [a described condition or event] is detected" may be interpreted as "once it is determined that", or "in response to a determination", or "once [a described condition or event] is detected", or "in response to a case where [a described condition or event] is detected".

Generally speaking, when quantizing data, if a wide value range is selected, the precision of quantized data may be low, and if the value range is too small, too much data may be truncated, resulting in information loss of the data distributed on both sides, where the value range refers to the value range between a minimum truncation threshold used to quantize the data and a maximum truncation threshold used to quantize the data. Therefore, it is necessary to find a pair of suitable truncation thresholds to quantize the data, so that the loss of data quantization is minimal or small. Traditionally, a Kullback-Leibler divergence (KL divergence) method is used to determine an optimal truncation threshold, where the KL divergence may determine a correlation between the data before and after the quantization. The KL divergence is also known as a relative entropy, an information divergence, and an information gain. The KL divergence is a measure of a difference between two probability distributions $P$ and $Q$. Assuming that the distribution of 32-bit floating-point numbers before the quantization is $P$, and the distribution of 8-bit integers after the quantization is $Q$, then as long as the KL divergence between P and Q is smaller, the closer the distribution before and after the quantization, the more effective the quantization. However, the inventors of the present disclosure found that the quantization effect achieved by the truncation threshold obtained by the traditional KL method is not good and usually causes a large loss of precision.

To this end, the embodiments of the present disclosure propose a new solution for determining a truncation threshold for symmetric quantization, which may achieve a smaller loss of quantization precision than traditional technologies (such as the KL method). According to an embodiment of the present disclosure, after obtaining a group of data to be quantized for a machine learning model, a plurality of pairs of truncation thresholds are used to quantize the group of data to be quantized respectively to determine a plurality of groups of quantized data. Each pair of truncation thresholds in the plurality of pairs of truncation thresholds includes a truncation positive value and a truncation negative value that are symmetrical. Then, a difference between a mean value of an absolute value of each group of quantized data and a mean value of an absolute value of the group of data to be quantized is used as an evaluation index to select a suitable pair of truncation thresholds from the plurality of pairs of truncation thresholds. In this way, a more suitable truncation threshold may be found.

Basic principles and several example implementations of the present disclosure are described below with reference to FIG. 1-1 to FIG. 1-10. It should be understood that these exemplary embodiments are given only to enable those skilled in the art to better understand and then implement the embodiments of the present disclosure, but not to limit the scope of the present disclosure in any way.

FIG. 1-1 is a schematic diagram of a processing system 1-100 configured to implement a method for processing data according to an embodiment of the present disclosure; As shown in FIG. 1-1, the processing system 1-100 includes a plurality of processors 1-101-1, 101-2, 1-101-3 (collectively referred to as processors 1-101) and a memory 1-102. The processor 1-101 is configured to execute an instruction sequence, and the memory 1-102 is configured to store data. The processor 102 may include a random-access memory (RAM) and a register file. The plurality of processor 1-101 in the processing system 1-100 may share part of the storage space such as part of the RAM storage space and the register file, but may also have their own storage space at the same time.

It should be understood that various methods according to the embodiments of the present disclosure may be applied to any one processor of the processing system 1-100 (such as an artificial intelligence chip) including a plurality of processors (multi-core). The processor may be a general-purpose processor, for example, a central processing unit (CPU) or an intelligence processing unit (IPU) for artificial intelligence computations. The artificial intelligence computations may include machine learning computations, brain-like computations, and the like. The machine learning computations may include neural network computations, k-means computations, support vector machine computations, and the like. The artificial intelligence processor may include one or more of, for example, a graphics processing unit (GPU), a neural-network processing unit (NPU), a digital signal processing (DSP) unit, and a field-programmable gate array (FPGA) chip. The present disclosure does not limit the specific types of the processors. In addition, the types of multiple processors in the processing system 1-100 may be the same or different, which is not limited in the present disclosure.

In a possible implementation, the processors mentioned in the present disclosure may include a plurality of processing units, and each processing unit may independently execute various assigned tasks, such as convolution computation task, pooling task, or fully connected task, and the like. The present disclosure does not limit the processing unit and the tasks executed by the processing unit.

FIG. 1-2 is a schematic diagram of an exemplary architecture of a neural network 1-200 according to an embodiment of the present disclosure. A neural network (NN) is a mathematical model which imitates structures and functions of a biological neural network, and is computed by plenty of connected neurons. Therefore, a neural network is a computational model composed of plenty of connected nodes (or called "neurons"). Each node represents a specific output function called activation function. A connection between each two neurons represents a weighted value that passes through the connection signal and is called a weight. The weight may be viewed as "memory" of a neural network. An output of a neural network varies according to different connection methods between neurons, different weights, and different activation functions. A neuron is a basic unit of the neural network, which obtains a certain count of inputs and a bias. The certain count of inputs and the bias are multiplied by a weight when a signal (value) arrives. The connection refers to connecting one neuron to another neuron in another layer or a same layer, and the connection is accompanied by an associated weight. In addition, the bias is an extra input of the neuron, which is always 1 and has its own connection weight. This ensures that the neuron may be activated even if all inputs are empty (all 0).

In applications, if no non-linear function is applied to the neuron in the neural network, the neural network is only a linear function and is not powerful than a single neuron. If an output result of a neural network is between 0 and 1, for example, in a case of cat-dog identification, an output close to 0 may be regarded as a cat and an output close to 1 may be regarded as a dog. An activation function such as a sigmoid activation function is introduced into the neural network to realize the cat-dog identification. A return value of the activation function is a number between 0 and 1. Therefore, the activation function is configured to introduce non-linearity into the neural network, which may narrow down the range of a neural network computation result. In fact, how the activation function is represented is not important, and what is important is to parameterize a non-linear function by some weights, thus the non-linear function may be changed by changing the weights.

FIG. 1- 2 is a structural diagram of a neural network 1- 200. The neural network shown in FIG. 1- 2 contains three layers: an input layer 1- 210, a hidden layer 1- 220, and an output layer 1- 230. The hidden layer 1- 220 shown in FIG. 1- 2 contains three layers. Of course, the hidden layer 1- 220 may also include more or fewer layers, where the neuron in the input layer 1- 210 is called an input neuron. As a first layer in the neural network, the input layer needs to input signals (values) and transmits the signals (values) to a next layer. The input layer does not perform operations on the input signals (values), and has no associated weight or bias. The neural network shown in FIG. 1- 2 may receive four input signals (values).

The hidden layer 1- 220 is configured to apply different neurons (nodes) to the input data. A hidden layer is a representation of neurons arranged vertically. The neural network shown in FIG. 1- 2 contains three hidden layers. A first hidden layer contains four neurons (nodes), a second hidden layer contains six neurons, and a third hidden layer contains three neurons. Finally, the hidden layer transfers values to the output layer. In the neural network 1- 200 shown in FIG. 1- 2, each of the neurons in the three hidden layers is fully connected, and each of the neurons in three hidden layers is connected with each neuron in the next layer. It should be noted that in some neural networks, hidden layers may not be fully connected.

The neurons of the output layer 1- 230 is called the output neurons. The output layer receives an output from the last hidden layer. Through the output layer 1- 230, the desired value and the desired range may be determined. In the neural network shown in FIG. 1-2, the output layer contains three neurons, in other words, three output signals (values).

In practical applications, the function of the neural network is to train a large number of sample data (including input and output) in advance. After the training, the neural network is used to obtain an accurate output for the future input of the real environment.

Before the discussion of neural network training, a loss function needs to be defined. The loss function is a function that indicates how well the neural network performs on a particular task. The most direct way to do this is to pass each sample data along the neural network to get a number during the training process, and then calculate the difference between this number and the wanted actual number, and then square it. What is calculated is the distance between the predicted value and the true value, and training the neural network is to reduce this distance or the value of the loss function.

At the beginning of neural network training, the weight needs to be initialized randomly. It is apparent that an initialized neural network may not provide a good result. In the training process, if starting from an initialized neural network, a network with high precision may be obtained through training. At the same time, it is also hoped that at the end of the training, the function value of the loss function becomes particularly small.

The training process of a neural network includes two stages. The first stage is to perform a forward processing on a signal, which includes sending the signal from the input layer 1- 210 to the output layer 1- 230 through the hidden layer 1- 220. The second stage is to perform back propagation on a gradient, which includes propagating the gradient from the output layer 1- 230 to the hidden layer 1- 220, and finally to the input layer 1- 210, and sequentially adjusting weights and biases of each layer in the neural network according to the gradient.

In the process of forward processing, an input value is input into the input layer 1- 210 in the neural network and an output (called a predicted value) is obtained from the output layer 1-230 in the neural network. When the input value is input into the input layer 1- 210 in the neural network, the input layer does not perform any operation. In the hidden layer, the second hidden layer obtains a predicted intermediate result value from the first hidden layer to perform a computation operation and an activation operation, and then sends the obtained predicted intermediate result value to the next hidden layer. The same operations are performed in the following layers to obtain the output value in the output layer 1- 230 in the neural network.

After forward processing, an output value called the predicted value is obtained. In order to calculate an error produced in the forward process, the loss function is used to compare the predicted value with an actual output value to obtain the corresponding error. A chain rule of calculus is used in the back propagation. In the chain rule, derivatives of errors corresponding to the weights of the last layer in the neural network are calculated first. The derivatives are called gradients, which are then used to calculate the gradients of the penultimate layer in the neural network. The process is repeated until the gradient to each weight in the neural network is obtained. Finally, the corresponding gradient is subtracted from each weight, and then the weight is updated once to reduce the errors.

For a neural network, fine-tuning refers to loading a trained neural network. The process of fine-tuning also includes two stages, which are the same as those of training. The first stage is to perform the forward processing on a signal, and the second stage is to perform the back propagation on a gradient to update weights in the trained neural network. The difference between training and fine-tuning is that training refers to randomly processing an initialized neural network and starts from the beginning, while fine-tuning does not start from the beginning.

In the process of training or fine-tuning a neural network, weights in the neural network are updated based on gradients once every time the neural network performs a forward processing on a signal and performs a corresponding back propagation on the error, and the whole process is called an iteration. In order to obtain a neural network whose precision meets expectations, a very large sample data set is required during the training process. In this case, it is impossible to input the entire sample data set into a computer at once. Therefore, in order to solve the problem, the sample data set needs to be divided into a plurality of blocks and then each block of the sample data set is passed to the computer. After the forward processing is performed on each block of the sample data set, the weights in the neural network are correspondingly updated once. When the neural network performs a forward processing on a complete sample data set and returns a weight update correspondingly, the process is called an epoch. In practice, it is not enough to perform forward processing on a complete data set in the neural network only once. It is necessary to transmit the complete data set in the same neural network a plurality of times, in other words, a plurality of epochs is needed to obtain a neural network with expected precision.

In the process of neural network training or fine-tuning, it is usually hoped that the faster the better, and the higher the precision, the better. Since data in the neural network is represented in a high-precision data format such as floating-point numbers, all the data involved in the process of training or fine-tuning is in the high-precision data format and then the trained neural network is quantized. For example, when quantized objects are weights of a whole neural network and the quantized weights are 8-bit fixed-point numbers, since a neural network usually contains millions of connections, almost all the space is occupied by weights that are connected with neurons. The weights are different floating-point numbers. The weights of each layer tend to be normally distributed in a certain interval, such as (-3.0, 3.0). A maximum value and a minimum value corresponding to the weights of each layer in the neural network are stored, and the value of each floating-point number is represented by an 8-bit fixed-point number. The interval within the range of the maximum value and the minimum value is linearly divided into 256 quantization intervals, in which each quantization interval is represented by an 8-bit fixed-point number. For example, in an interval of (- 3.0, 3.0), byte 0 represents - 3.0 and byte 255 represents 3.0. Similarly, byte 128 represents 0.

For data represented in a high-precision data format such as a floating-point number, based on rules of computation representation of floating-point and fixed-point numbers according to a computer architecture, for a fixed-point computation and a floating-point computation of the same length, a floating-point computation model is more complex and needs more logic components to build a floating-point computation unit. In other words, a volume of the floating-point computation unit is larger than the volume of a fixed-point computation unit. Moreover, the floating-point computation unit needs to consume more resources to process, so that a gap of power consumption between the fixed-point computation unit and the floating-point computation unit is usually an order of magnitude. Therefore, the floating-point computation unit occupies many times more chip area and consumes many times more power than the fixed-point computation unit.

FIG. 1- 3 illustrates a schematic diagram of a process 1- 300 for data quantization according to an embodiment of the present disclosure; referring to FIG. 1- 3, the input data 1-310 is an unquantized floating-point number, such as a 32-bit floating point number. If the input data 1- 310 is directly input to the neural network model 1- 340 for processing, more computing resources may be consumed, and the processing speed may be slower. Therefore, the input data may be quantized at block 1- 320 to obtain the quantized data 1- 330 (for example, the 8-bit integer). If the quantized data 1- 330 is input into the neural network model 1- 340 for processing, since the 8-bit integer calculation is faster, the neural network model 1- 340 will complete the processing of the input data faster and generate the corresponding output result 1-350.

During the quantization process from the unquantized input data 1- 310 to the quantized data 1- 330, some precision loss will be caused to a certain extent, and the degree of precision loss will directly affect the precision of the output result 1- 350. Therefore, in the quantization process of the input data 1- 330, it is necessary to ensure that the precision loss of the quantization process is minimal or as small as possible.

FIG. 1-4A shows a schematic diagram 1- 400 for quantizing data symmetrically in an embodiment of the present disclosure; FIG. 1-4A shows the simplest symmetric quantization method. It directly selects the maximum absolute value of all the values in the data to be quantized, which is |max|, and then performs the quantization in the range of -|max| to |max| to generate quantized data. However, this method will cause low precision in the quantized data because of no truncating.

FIG. 1-4B is a schematic diagram 1- 450 for quantizing data symmetrically based on the truncation threshold according to an embodiment of the present disclosure. Different from the direct quantization method in FIG. 1-4A, a truncation threshold T is selected in FIG. 1-4B, and the data outside the range of -|T| to |T| will be set to -|T| or |T|. For example, in the example of FIG. 1-4B, the three values to be quantized in the circle 1- 460 are outside the truncation range, so they will be treated as a value -|T| for quantization and quantized to a data point 1- 470. The precision of the quantized data may be improved by using truncation threshold to narrow down the value range of the data to be quantized. However, how to obtain the truncation threshold with the least loss of quantization precision is a technical problem that needs to be solved urgently.

FIG. 1- 5 illustrates a flowchart of a process 1- 500 for processing data according to an embodiment of the present disclosure. It should be understood that the method 1- 500 may be executed by one or more processors 1- 101 in FIG.1.

A group of data to be quantized for machine learning model is obtained at block 1-502. For example, the input data 1-310 to be quantized may be obtained by referring to FIG. 1-3, and the input data may be quantized, thereby speeding up the processing speed of the neural network model 1-340. In addition, some parameters (such as weights) of the neural network model itself may also be quantized. By quantizing the network parameters, the size of the neural network model may be reduced. In some embodiments, the data to be quantized may be 32-bit floating-point number. Alternatively, the data to be quantized may also be floating-point numbers with other digits, or other data types.

At block 1-504, a plurality of pairs of truncation thresholds are used to quantize a group of data to be quantized respectively to determine a plurality of groups of quantized data, where each pair of truncation threshold in the plurality of pairs of truncation thresholds includes a truncation positive value and a truncation negative value that are symmetrical. In the symmetric quantization scheme, the truncation threshold is a pair of symmetrical positive and negative values; in other words, the truncated positive value and the truncated negative value. The values of these two are the same but have opposite signs.

According to the embodiments of the present disclosure, a plurality of pairs of truncation threshold may be selected to quantize the data to be quantized separately. In some embodiments, some truncation thresholds may be selected at fixed intervals, for example, a truncation threshold may be selected every predetermined distance according to the maximum absolute value in the data to be quantized. In some embodiments, only a few truncation thresholds at specific locations may be selected, for example, only select a few predetermined proportions of the maximum absolute value.

In some embodiments, the corresponding one or more quantization parameters may be calculated according to each pair of truncation thresholds, and then the calculated quantization parameters may be used to quantize the data to be quantized. Alternatively, the data to be quantized may also be directly quantized through various formulas or models according to the truncation threshold without separately calculating the value of each quantization parameter.

At block 1-506, based on a difference between a mean value of an absolute value of each group of quantized data in the plurality of groups of quantized data and a mean value of an absolute value of the group of the data to be quantized, a pair of truncation thresholds from the plurality of pairs of truncation thresholds is selected to quantize a group of data to be quantized. The inventors of the present application have discovered through research and a large number of experiments that the mean difference between the absolute values of the data before and after quantization may reflect the precision loss before and after quantization, where the smaller the mean absolute difference, the smaller the precision loss of the quantization operation. Therefore, the embodiments of the present disclosure use the difference of the mean values of the absolute values of the data before and after the quantization as an index for selecting the optimal truncation threshold, which may achieve a smaller precision loss than the traditional KL method.

In some embodiments, the difference between the mean value of the absolute value of the quantized data and the mean value of the absolute value of the data to be quantized may be the difference between the two absolute mean values. Alternatively, the difference between the mean value of the absolute value of the quantized data and the mean value of the absolute value of the data to be quantized may be: the difference between the two absolute mean values is divided by the mean value of the absolute value of the data to be quantized, and then take the absolute value.

In some embodiments, after selecting the best pair of truncation thresholds, the selected pair of truncation thresholds may be used to quantize a group of data to be quantized to obtain quantized data, including: truncating data that greater than the truncated positive value in the group of data to be quantized to a truncated positive value, and truncating data that greater than the truncated negative value in the group of data to be quantized that is less than the truncated negative value; then input the obtained quantized data to the neural network model for processing.

FIG. 1-6 is a flow chart 1-600 of a method for searching symmetric quantized truncation threshold according to an embodiment of the present disclosure, and the method 1-600 determines a pair of optimal truncation threshold based on the data to be quantized for data quantization.

At block 1-602, the mean value of the absolute value of the data to be quantized and the maximum absolute value in the data to be quantized are determined, where the mean value of the absolute value is the sum of the absolute values of all the data in the data to be quantized divided by the number of elements. In addition, the minimum mean difference is also initialized, for example, the maximum value in the floating-point number is initially set, and the search order i of the cyclic search is initialized (for example, initialized to 0). In some embodiments, the search order i may also be initialized to half of the total number of searches, in other words, the search starts from the middle, which may improve the search efficiency. According to the embodiments of the present disclosure, one or more rounds of the threshold search process may be set, and each round of the threshold search may have the same or different total number of searches. In some embodiments, the total number of searches of each round may be set in the range between 10 and 32. Generally speaking, the more the total number of searches, the longer the search time and the more precise the searched truncation threshold is. However, when the total number of searches reaches a certain value, the search performance may no longer be substantially improved.

Next, the first round of coarse-grained truncation threshold search is started. FIG. 1-7A is a sample schematic diagram 1- 700 of a truncation threshold for coarse-grained search symmetric quantization according to an embodiment of the present disclosure. As shown in FIG. 1-7A, 10 candidate truncation thresholds may be determined in the data to be quantized (identified by the dotted line in FIG. 1-7A), and these 10 pairs of truncation thresholds may be used in turn (FIG. 1-7A only shows the positive truncation values, and the corresponding negative truncation values are not shown) to perform quantization process. The optimal pair of truncation thresholds is determined according to the difference of the absolute value of the data before and after the quantization.

At block 1- 604, it is determined whether the search order i is less than the total number of searches, in other words, when each pair of truncation thresholds is selected in turn for quantization, it is determined whether all the calculations of the truncation threshold have been completed. If the search order i is less than the total number of searches, at block 1- 606, based on the current search order i, a pair of truncation thresholds is determined, and the pair of truncation thresholds are respectively the maximum absolute value/total number of searches*(i+1), the maximum absolute value/total number of searches*(i+1). At block 1- 608, this pair of truncation thresholds is used to quantize the data to be quantized to obtain the corresponding quantized data Quant_data_i, and then at block 1- 610, the difference Distance_i = abs (Quant_data_mean_i-Data_mean)/ Data_mean between the mean value of the absolute value of the quantized data Quant_data_mean_i and the mean value of the absolute value of the data to be quantized Data mean is calculated.

At block 1- 612, it is determined whether the calculated difference Distance i is less than the current minimum difference. If so, at block 1- 614, the calculated difference Distance_i is set as the current minimum difference, and the truncation threshold when the difference is the smallest is recorded, and then the search order i (for example, i++) is incremented at block 1-616. If it is judged at block 1- 612, the search order i is directly incremented at block 1- 616, in other words, the difference between the next pair of truncation thresholds is determined. Next, the steps 1- 604 to 1- 616 are circulated until the value of the search order i reaches the total number of searches, then exit the first round of the search process of the truncation threshold at block 1- 618. As shown in FIG. 1-7A, after the first round of search, it is determined that the difference corresponding to the truncation threshold at the dotted line 1- 770 is the smallest. It may be seen that the process of truncation threshold search is: using the multiple pairs of truncation thresholds to quantize the data <u>to be quantized</u>, and determining the group of quantized data that has the smallest difference in the mean absolute value of the plurality of groups of quantized data and the data to be quantized, and then selecting a pair of truncation thresholds corresponding to this group of quantized data from plurality of pairs of truncation thresholds.

Optionally, a second round of fine-grained truncation threshold search process may be performed. The second round of search process may also refer to method 1- 600, except that the second round of search is within a certain range around the first round of optimal truncation threshold 1- 770 (for example, the previous truncation threshold and the next truncation threshold of selected truncation threshold 1- 770) is performed, which is a further refinement of the first round of search results. For example, in the second round of searching, the interval between each pair of truncation thresholds may be (maximum absolute value*2)/ (total number of searches in the first round*total number of searches in the second round). FIG. 1-7B is a schematic diagram of a truncation threshold for fine-grained search for symmetric quantization according to an embodiment of the present disclosure. Referring to FIG.7B, the optimal fine-grained truncation threshold is determined as 1- 772 and 1- 778 after the second search. Through the two-round search method, a more precise truncation threshold may be obtained, and the precision loss caused by quantization may be further reduced.

FIG. 1- 8 illustrates a flowchart of a method 1- 800 for iteratively search for the best truncation threshold according to an embodiment of the present disclosure; at block 1- 802, three pairs of truncation thresholds are determined. For example, the maximum absolute value absmax of all data in the data to be quantized $F_x$ may be determined. The three pairs of truncation thresholds may be (-absmax/2, absmax/2), (-absmax* 3/4, absmax*3/4) and (-absmax, absmax). At block 1- 804, the three pairs of truncation thresholds are used to respectively quantize the data to be quantized to obtain the quantized data $\widehat{F_x 1}$ , $\widehat{F_x 2}$ , $\widehat{F_x 3}$ , and then the mean values $F_{mean}$, $\widehat{F_{1mean}}$ , $\widehat{F_{2mean}}$ , $\widehat{F_{3mean}}$ of the corresponding absolute values $F_x$, $\widehat{F_x 1}$ , $\widehat{F_x 2}$ , $\widehat{F_x 3}$ are calculated respectively. Then select the minimum difference diff min according to the formula $\text{diff} = \text{abs}(\frac{F_{mean} - \widehat{F_{mean}}}{\widehat{F_{mean}}}$ . At block 1- 806, it is determined whether the minimum difference diff min is less than the predetermined truncation threshold. If not, then at block 1- 808, based on the selected pair of truncation thresholds (set the value corresponding to the minimum difference diff min as the new absolute maximum value), re-determine the three pairs of truncation thresholds, and repeat the above process until the minimum difference diff min is less than the predetermined threshold, and then the iterative process of the truncation threshold is exited at block 1- 810. In some embodiments, in addition to the iteration stopping condition that the minimum difference diff min is less than a predetermined threshold, other iteration stopping conditions may also be set, such as the maximum number of iterations, reaching the predetermined minimum interval and so on. In addition, although the method 1-800 of FIG.

1- 8 shows iteratively selecting the best pair of truncation thresholds, it may also not to perform iteration, but only perform once, and then directly use the pair of truncation thresholds corresponding to the smallest difference diff min as the final truncation threshold.

In some embodiments, the quantization parameters when using each pair of truncation thresholds to quantize data may be determined by the following equations (1)-(3),

$$\widehat{F_x} = round(\frac{F_x}{2^s \times f}) \times 2^s \times f \qquad (1).$$

$$S = ceil\left(log_2\left(\frac{p}{2^{n-1}-1}\right)\right) \qquad (2).$$

$$f = \frac{p}{2^S} \qquad (3).$$

In these formulas, p is the maximum absolute value in the data to be quantized, n represents the number of binary digits after quantization, S and f represent quantization parameters, and ceil represents rounding up.

According to the embodiments of the present disclosure, quantization parameters S1, f1, S2, f2, S3, and f3 may be obtained by selecting p as absmax/2, absmax*3/4, and absmax respectively, thereby obtaining the quantized data $\widehat{F_x}1$, $\widehat{F_x}2$, $\widehat{F_x}3$. Correspondingly, after selecting a pair of truncation thresholds, S and f corresponding to the pair of truncation thresholds are directly taken as the quantization parameters of the data to be quantized.

It should be noted that above mentioned embodiments, for the sake of conciseness, are all described as a series of action combinations, but those skilled in the art should know that the present disclosure is not limited by the described order of action since some steps may be performed in a different order or simultaneously according to the present disclosure. Secondly, those skilled in the art should also understand that the embodiments described in the specification are all optional, and the actions and units involved are not necessarily required for this disclosure.

It should be further noted that although the steps in the flowchart are displayed in sequence as indicated by the arrows, these steps are not necessarily executed in the order indicated by the arrows. Unless there is a clear description in this article, there is no strict order for the execution of these steps, and these steps may be executed in other orders. Moreover, at least part of the steps in the flowchart may include a plurality of sub-steps or a plurality of stages, which are not necessarily executed at the same time, but may be executed at different times. The execution of these sub-steps or stages is not necessarily performed sequentially, but may be performed alternately with other steps or sub-steps of other steps or at least a part of the stages.

FIG. 1- 9 illustrates a diagram of an apparatus 1- 900 for processing data according to an embodiment of the present disclosure. As shown in FIG. 1- 9, the apparatus 1- 900 includes a data to be quantized obtaining unit 1- 910, a quantized data determining unit 1- 920, and a truncation threshold selecting unit 1- 930. The data to be quantized obtaining unit 901 is configured to obtain a group of data to be quantized for machine learning model. The quantized data determining unit 1- 920 is configured to quantize a group of data to be quantized respectively by using a plurality of pairs of truncation thresholds to determine a plurality of groups of quantized data. Each pair of truncation thresholds in the plurality of pairs of truncation thresholds includes a truncation positive value and a truncation negative value that are symmetrical. The truncation threshold selecting unit 1- 930 is configured to select a pair of truncation threshold from the plurality of pairs of truncation thresholds to quantize the group of data to be quantized based on the difference between the mean value of the absolute value of each group of quantized data in the plurality of groups of quantized data and the mean value of the absolute value of the group of data to be quantized.

In addition, the data to be quantized obtaining unit 1- 910, the quantized data determining unit 1- 920, and the truncation threshold selecting unit 1- 930 in the apparatus 1-900 may also be configured to perform steps and/or actions according to various embodiments of the present disclosure.

It should be understood that the foregoing apparatus embodiments are only illustrative, and the apparatus of the present disclosure may also be implemented in other ways. For example, the division of the units/modules in the foregoing embodiment is only division of logical function, and there may be other division methods in actual implementation. For example, a plurality of units, modules, or components may be combined together or integrated into another system, or some features may be ignored or not implemented.

In addition, unless specified, each functional units/modules in each embodiments of the present disclosure may be integrated into one unit/module. Alternatively, each unit/module may exist alone physically, or two or more units/modules may be integrated together. The above-mentioned integrated units/modules may be implemented in the form of hardware or in the form of software program units.

When the above-mentioned integrated units/modules are implemented in the form of hardware, the hardware may be a digital circuit, an analog circuit, and the like. Physical implementation of the hardware structure may include, but is not limited to, a transistor, a memristor, and the like. Unless specified, the artificial intelligence processor may be any appropriate hardware processor, such as a CPU, a GPU, an FPGA, a DSP, an ASIC, and the like. Unless specified, the storage unit may be any suitable magnetic storage medium or magneto-optical storage medium, such as an RRAM (resistive random-access memory), a DRAM (dynamic random access memory), a SRAM (static random-access memory), an EDRAM (enhanced dynamic random access memory), an HBM (high-bandwidth memory), an HMC (hybrid memory cube), and the like.

If the integrated units/modules are implemented in the form of software program units and sold or used as an independent product, they may be stored in a computer-readable memory. Based on such understanding, the essence of the technical solutions of the present disclosure, or a part of the present disclosure that contributes to the prior art, or all or part of the technical solutions may be embodied in the form of a software product. The software product is stored in a memory, which includes several instructions to enable a computer device (which may be a personal computer, a server, or a network apparatus, and the like.) to perform all or part of the steps of the methods described in each embodiment of the present disclosure. The foregoing memory includes: a USB flash drive, a read-only memory (ROM), a random-access memory (RAM), a mobile hard disk, a magnetic disk or an optical disc, and other media that may store program codes.

An embodiment provides a readable storage medium, which stores a computer program. When the computer program is executed, methods of each embodiment according to the present disclosure is implemented.

In an embodiment, an artificial intelligence chip including the above-mentioned data processing apparatus is disclosed.

An embodiment provides a board card, which includes a storage component, an interface apparatus, a control component, and the above-mentioned artificial intelligence chip. The artificial intelligence chip is connected to the storage component, the control component, and the interface apparatus respectively. The storage component is used to store data; the interface apparatus is used to realize data transmission between the artificial intelligence chip and an external device. The control component is used to monitor state of the artificial intelligence chip.

FIG. 1-10 shows a structural block diagram of a board card according to an embodiment of the present disclosure. Referring to FIG. 1-10, the above-mentioned board card 1-1000 may include other supporting apparatuses in addition to the chip 1-1030-1 and 1-1030-2 (collectively referred to as chip 1-1030), and supporting apparatus include, but are not limited to: a storage component 1-1010, an interface apparatus 1-1040 and a control component 1-1020. The interface apparatus 1-1040 may be connected to an external device 1-1060. The storage component 1-1010 is connected to the artificial intelligence chip 1-1030 through a bus 1-1050 for storing data. The storage component 1-1010 may include a plurality of groups of storage units 1-1010-1 and 1-1010-2. Each group of storage units is connected to the artificial intelligence chip through the bus. 1-1050 It may be understood that each group of the storage units may be a DDR SDRAM (double data rate synchronous dynamic random-access memory).

DDR does not need to increase the clock frequency to double the speed of SDRAM. DDR allows data to be read on the rising and falling edges of the clock pulse. The speed of DDR is twice that of a standard SDRAM. In an embodiment, the memory apparatus may include 4 groups of storage units. Each group of storage units may include a plurality of DDR4 particles (chips). In an embodiment, four 72-bit DDR4 controllers may be arranged inside the artificial intelligence chip, where 64bit of each 72-bit DDR4 controller is for data transfer and 8bit is for ECC parity. It may be understood that when each group of the storage units adopts DDR4-3200 particles, the theoretical bandwidth of data transmission may reach 25600MB/s.

In an embodiment, each group of the storage units include a plurality of DDR SDRAMs arranged in parallel. DDR may transfer data twice per clock cycle. A DDR controller may be arranged inside the chip to control the data transmission and data storage of each storage unit.

The interface apparatus may be electrically connected to the artificial intelligence chip. The interface apparatus is configured to realize data transfer between the artificial intelligence chip and an external device (such as a server or a computer). For example, in an embodiment, the interface apparatus may be a standard PCIE interface. For example, data to be processed is transferred from the server to the chip through a standard PCIE interface to realize data transfer. Alternatively, when a PCIe 3.0 X 16 interface is adopted for transferring, the theoretical bandwidth may reach 16000MB/s. In another embodiment, the interface apparatus may also be another interface. The present disclosure does not restrict a specific form of other interfaces as long as the interface unit may realize the transferring function. In addition, a computation result of the artificial intelligence chip may still be transferred by the interface apparatus to an external device (such as a server).

The control component is electrically connected to the artificial intelligence chip. The control component is configured to monitor a state of the artificial intelligence chip. Specifically, the artificial intelligence chip and the control component may be electrically connected through an SPI interface. The control component may include an MCU (Microcontroller unit). If the artificial intelligence chip includes a plurality of processing chips, a plurality of processing cores, or a plurality of processing circuits, the chip is capable of driving a plurality of loads. In this case, the artificial intelligence chip may be in different working state such as multi-load state and light-load state. The working state of the plurality of processing chips, the plurality of processing cores, and/or a plurality of processing circuits may be regulated and controlled by the control component.

In a possible implementation, an electronic device including the above-mentioned artificial intelligence chip is disclosed. The electronic device includes a data processing apparatus, a robot, a computer, a printer, a scanner, a tablet computer, a smart terminal, a mobile phone, a traffic recorder, a navigator, a sensor, a webcam, a server, a cloud-based server, a camera, a video camera, a projector, a watch, a headphone, a mobile storage, a wearable device, a vehicle, a household appliance, and/or a medical device.

The vehicle includes an airplane, a ship, and/or a car; the household electrical appliance may include a television, an air conditioner, a microwave oven, a refrigerator, an electric rice cooker, a humidifier, a washing machine, an electric lamp, a gas cooker, and a range hood; and the medical device may include a nuclear magnetic resonance spectrometer, a B-ultrasonic scanner, and/or an electrocardiograph.

In the above-mentioned embodiments, descriptions of each embodiment have their own emphasis. For parts that are not described in detail in an embodiment, reference may be made to related descriptions of other embodiments. The technical features of the above embodiments may be combined arbitrarily. In order to make the description concise, all possible combinations of the technical features in the above embodiments are not described. However, as long as there is no contradiction in the combination of these technical features, they should be considered in the range described in this specification.

The foregoing contents may be better understood according to the following articles:

A1. A method for processing data, comprising:

obtaining a group of data to be quantized for a machine learning model;
quantizing the group of data to be quantized respectively through using a plurality of pairs of truncation thresholds to determine a plurality of groups of quantized data, wherein each pair of truncation thresholds in the plurality of pairs of truncation thresholds includes a truncation positive value and a truncation negative value that are symmetrical; and
selecting a pair of truncation thresholds from the plurality of pairs of truncation thresholds based on a difference between a mean value of an absolute value of each group of quantized data in the plurality of groups of quantized data and a mean value of an absolute value of the group of data to be quantized to quantize the group of data to be quantized.

A2. The method of A1, wherein determining the plurality of groups of quantized data includes:

determining a maximum absolute value of all data in the group of data to be quantized; and
determining the plurality of pairs of truncation thresholds based on the maximum absolute value.

A3. The method of A2, wherein determining the plurality of groups of quantized data further includes:

determining a first truncation positive value based on the maximum absolute value, a predetermined total number of searches, and a current search order;
quantizing the group of data to be quantized through using a first pair of truncation thresholds to determine a first group of quantized data, wherein the first pair of truncation thresholds includes a first truncation positive value and a first truncation negative value that is opposite to the first truncation positive value; and
determining a first difference between a mean value of an absolute value of the first group of quantized data and the mean value of the absolute value of the group of data to be quantized.

A4. The method of A2, wherein determining the plurality of groups of quantized data further includes:

incrementing the current search order;
determining a second truncation positive value based on the maximum absolute value, the predetermined total number of searches, and the current search order;
quantizing the group of data to be quantized through using a second pair of truncation thresholds to determine a second group of quantized data, wherein the second pair of truncation thresholds includes the second truncation positive value and a second truncation negative value that is opposite to the second truncation positive value; and

determining a second difference between a mean value of an absolute value of the second group of quantized data and the mean value of the absolute value of the group of data to be quantized.

A5. The method of any one of A1-A4, wherein selecting the pair of truncation thresholds from the plurality of pairs of truncation thresholds includes:

determining, from the plurality of groups of quantized data, a group of quantized data that has a smallest difference with the group of data to be quantized in terms of mean value of absolute value; and
selecting a pair of truncation thresholds corresponding to the group of quantized data from the plurality of pairs of truncation thresholds.

A6. The method of A5, further comprising:

determining a truncation search range associated with the selected pair of truncation thresholds;
determining a plurality of new pairs of truncation thresholds within the truncation search range;
quantizing the group of data to be quantized respectively through using the plurality of new pairs of truncation thresholds to determine a plurality of new groups of quantized data; and
selecting a new pair of truncation thresholds from the plurality of new pairs of truncation thresholds based on a difference between the mean value of the absolute value of the group of data to be quantized and a mean value of an absolute value of each group of quantized data in the plurality of new groups of quantized data.

A7. The method of A1, wherein quantizing the group of data to be quantized respectively through using the plurality of pairs of truncation thresholds to determine the plurality of groups of quantized data includes:

determining a maximum absolute value of all data in the group of data to be quantized;
determining three pairs of truncation thresholds based on the maximum absolute value, wherein among the three pairs of truncation thresholds, a first pair of truncation thresholds includes a half of the maximum absolute value and an opposite value of the half of the maximum absolute value, and a second pair of truncation thresholds includes three-quarters of the maximum absolute value and an opposite value of the three-quarters of the maximum absolute value, and a third pair of truncation thresholds includes the maximum absolute value and an opposite value of the maximum absolute value; and
quantizing the group of data to be quantized respectively through using the three pairs of truncation thresholds to determine three groups of quantized data.

A8. The method of A7, wherein selecting the pair of truncation thresholds from the plurality of pairs of truncation thresholds includes:
executing the following actions iteratively until a stop condition is met:

selecting the pair of truncation thresholds from the three pairs of truncation thresholds;
determining whether a difference corresponding to the selected pair of truncation thresholds is less than a predetermined threshold;
stopping the iterative execution of the actions in response to the difference being less than the predetermined threshold; and
redetermining the three pairs of truncation thresholds in response to the difference being greater than the predetermined threshold based on the selected pair of truncation thresholds.

A9. The method of any one of A1-A8, wherein the group of data to be quantized is a group of floating-point numbers in a neural network model, and the method further includes:

quantizing the group of data to be quantized using the selected pair of truncation thresholds to obtain quantized data, wherein the group of data to be quantized includes: setting a value that is greater than the truncation positive value in the group of data to be quantized as the truncation positive value, and setting a value that is less than the truncation negative value in the group of data to be quantized as the truncation negative value; and
inputting the obtained quantized data to the neural network model for processing.

A10. An apparatus for processing data, comprising:

a data to be quantized obtaining unit configured to obtain a group of data to be quantized for a machine learning model;

a quantized data determining unit configured to quantize the group of data to be quantized to be quantized respectively by using a plurality of pairs of truncation thresholds to determine a plurality of groups of quantized data, wherein each pair of truncation thresholds in the plurality of pairs of truncation thresholds includes a truncation positive value and a truncation negative value that are symmetrical; and

a truncation threshold selecting unit configured to select a pair of truncation thresholds from the plurality of pairs of truncation thresholds based on a difference between a mean value of an absolute value of each group of quantized data in the plurality of groups of quantized data and a mean value of an absolute value of the group of data to be quantized to quantize the group of data to be quantized.

A11. The apparatus of A10, wherein the quantized data determining unit includes:

a maximum absolute value determining unit configured to determine a maximum absolute value of all data in the group of data to be quantized; and

a plurality of pairs of truncation thresholds determining unit configured to determine the plurality of pairs of truncation thresholds based on the maximum absolute value.

A12. The apparatus of A11, wherein the quantized data determining unit further includes:

a first truncation positive value determining unit, configured to determine a first truncation positive value based on the maximum absolute value, a predetermined total number of searches, and a current search order;

a first group of quantized data determining unit configured to quantize the group of data to be quantized through using a first pair of truncation thresholds to determine a first group of quantized data, wherein the first pair of truncation thresholds includes a first truncation positive value and a first truncation negative value that is opposite to the first truncation positive value; and

a first difference determining unit configured to determine a first difference between a mean value of an absolute value of the first group of quantized data and the mean value of the absolute value of the group of data to be quantized.

A13. The apparatus of A12, wherein the quantized data determining unit further includes:

an incrementing unit configured to increment the current search order;

a second truncation positive value determining unit configured to determine a second truncation positive value based on the maximum absolute value, the predetermined total number of searches, and the current search order;

a second group of quantized data determining unit configured to quantize the group of data to be quantized by using a second pair of truncation thresholds to determine a second group of quantized data, wherein the second pair of truncation thresholds includes the second truncation positive value and a second truncation negative value that is opposite to the second truncation positive value; and

a second difference determining unit configured to determine a second difference between a mean value of an absolute value of the second group of quantized data and the mean value of the absolute value of the group of data to be quantized.

A14. The apparatus of any one of A10-13, wherein the truncation threshold selecting unit includes:

a minimum difference determining unit configured to determine, from the plurality of groups of quantized data, a group of quantized data that has a smallest difference with the group of data to be quantized in terms of mean value of absolute value; and

a second truncation threshold selecting unit configured to select a pair of truncation thresholds corresponding to the group of quantized data from the plurality of pairs of truncation thresholds.

A15. The apparatus of A14, further comprising:

a truncation search range determining unit configured to determine a truncation search range of associated with the selected pair of truncation thresholds;

a new plurality-of-pairs-of-truncation-thresholds determining unit configured to determine a plurality of new pairs of truncation thresholds within the truncation search range;

a second quantized data determining unit configured to quantize the group of data to be quantized respectively by using the plurality of new pairs of truncation thresholds to determine a plurality of new groups of quantized data; and
a third truncation threshold selecting unit configured to select a new pair of truncation thresholds based on a difference between the mean value of the absolute value of the group of data to be quantized and a mean value of an absolute value of each group of quantized data in the plurality of new groups of quantized data.

A16. The apparatus of A10, wherein the quantized data determining unit includes:

a maximum absolute value determining unit configured to determine a maximum absolute value of all data in the group of data to be quantized;
a three-pairs-of-truncation-thresholds determining unit configured to determine three pairs of truncation thresholds based on the maximum absolute value, wherein among the three pairs of truncation thresholds, a first pair of truncation thresholds includes a half of the maximum absolute value and an opposite value of the half of the maximum absolute value, and a second pair of truncation thresholds includes three-quarters of the maximum absolute value and an opposite value of the three-quarters of the maximum absolute value, and a third pair of truncation thresholds includes the maximum absolute value and the opposite value of the maximum absolute value; and
a three-groups-of-quantized-data determining unit configured to quantize the group of data to be quantized respectively by using the three pairs of truncation thresholds to determine three groups of quantized data.

A17. The apparatus of A16, wherein the truncation threshold selecting unit includes:
an iteration unit configured to execute the following actions iteratively until a stop condition is met:

selecting the pair of truncation thresholds from the three pairs of truncation thresholds;
determining whether a difference corresponding to the selected pair of truncation thresholds is less than a predetermined threshold;
stopping the iterative execution of the actions in response to the difference being less than the predetermined threshold; and
redetermining the three pairs of truncation thresholds in response to the difference being greater than the predetermined threshold based on the selected pair of truncation thresholds.

A18. The method of any one of A10-A17, wherein the group of data to be quantized is a group of floating-point numbers in a neural network model, and the apparatus further includes:

a data quantization unit, which is configured to quantize a group of data to be quantized using the selected pair of truncation thresholds to obtain quantized data, wherein the group of data to be quantized includes: setting a value that is greater than the truncation positive value in the group of data to be quantized as the truncation positive value, and setting a value that is less than the truncation negative value in the group of data to be quantized as the truncation negative value; and
a data input unit configured to input the obtained quantized data to the neural network model for processing.

A19. A computer readable storage medium, on which a computer program is stored, and when the program is executed, the method of any one of A1-A9 is realized.
A20. An artificial intelligence chip, comprising the apparatus for processing data of any one of A10-A18.
A21. An electronic device, comprising the artificial intelligence chip of A20.
A22. A board card, comprising a storage component, an interface apparatus, a control component, and the artificial intelligence chip of A20,

wherein the artificial intelligence chip is respectively connected to the storage component, the control component, and the interface apparatus;
the storage component is configured to store data;
the interface apparatus is configured to realize data transmission between the artificial intelligence chip and an external device; and
the control component is configured to monitor a state of the artificial intelligence chip.

A23. The board card of A22, wherein

the storage component includes: a plurality of groups of storage units, wherein each group of storage units is connected to the artificial intelligence chip through a bus, and the storage units are DDR SDRAMs (double data rate synchronous dynamic random-access memory);
the artificial intelligence chip includes: a DDR controller configured to control data transfer and data storage of each storage unit; and
the interface apparatus is a standard PCIe interface.

The embodiments of the present disclosure are described in detail above, and specific examples are used to illustrate principles and implementations of the present disclosure. The descriptions of the above embodiments are only used to help understand the methods and core ideas of the present disclosure. Persons of ordinary skill in the art may change or transform the implementation and application scope according to the ideas of the present application. The changes and transformations shall all fall within the protection scope of the present disclosure. In summary, the content of this specification should not be construed as a limitation on the present disclosure.

Embodiments of the present disclosure relate to the technical field of computer technology, and specifically to a method and an apparatus for processing data, and related products.

With continuous development, artificial intelligence technology is applied in more and more extensive fields, and have been well applied in fields of image recognition, speech recognition, natural language processing and the like. However, as the complexity and accuracy of artificial intelligence algorithms increase, machine learning models are getting larger and larger, and the number of data that needs to be processed is also getting larger. When a large number of data is processed, large calculation and time overhead are required, and the processing efficiency is low.

To solve the above problem, the following technical solutions are provided.

Technical solutions in embodiments of the present disclosure will be described clearly and completely hereinafter with reference to the drawings in the embodiments of the present disclosure. Obviously, the embodiments to be described are merely some of, but not all of embodiments of the present disclosure. All other embodiments obtained by those of ordinary skill in the art based on the embodiments of the present disclosure without creative efforts shall fall within the protection scope of the present disclosure.

It should be understood that terms such as "first", "second", "third", and "fourth" in the articles, the specification, and drawings are used for distinguishing different objects rather than describing a specific order. It should be understood that terms "including" and "comprising" used in the specification and the articles indicate the presence of a feature, an entity, a step, an operation, an element, and/or a component, but do not exclude the existence or addition of one or more other features, entities, steps, operations, elements, components, and/or collections thereof.

It should also be understood that the terms used in the specification of the present disclosure are merely for the purpose of describing particular embodiment rather than limiting the present disclosure. As being used in the specification and the articles of the disclosure, unless the context clearly indicates otherwise, the singular forms "a", "an" and "the" are intended to include the plural forms. It should also be understood that the term "and/or" used in the specification and the articles refers to any or all possible combinations of one or more of relevant listed items and includes these combinations.

As being used in this specification and the article, the term "if' may be interpreted as "when", or "once" or "in response to a determination" or "in response to a case where something is detected" depending on the context. Similarly, depending on the context, the clause "if it is determined that" or "if [a described condition or event] is detected" may be interpreted as "once it is determined that", or "in response to a determination", or "once [a described condition or event] is detected", or "in response to a case where [a described condition or event] is detected".

Generally speaking, when quantizing the data, if a wide value range is selected, the precision of the quantized data will be low, and if the value range is too small, too much data will be truncated, resulting in information loss of the data distributed on both sides, where the value range refers to the value range between the upper truncation and the lower truncation used to quantize the data. Therefore, it is necessary to find a pair of suitable truncation thresholds to quantize the data, so that the loss of data quantization is minimal or small. Traditionally, a Kullback-Leibler divergence (KL divergence) method is used to determine an optimal truncation threshold, where the KL divergence may determine a correlation between the data before and after the quantization. The KL divergence is also known as a relative entropy, an information divergence, and an information gain. The KL divergence is a measure of a difference between two probability distributions P and Q. Assuming that the distribution of 32-bit floating-point numbers before the quantization is P, and the distribution of 8-bit integers after the quantization is Q, then as long as the KL divergence between P and Q is smaller, the closer the distribution before and after the quantization, the more effective the quantization. However, the inventors of the present disclosure found that the quantization effect achieved by the truncation threshold obtained by the traditional KL method is not good and usually causes a large loss of precision.

To this end, the embodiments of the present disclosure propose a new solution for determining a truncation threshold for asymmetric quantization, which may achieve a smaller loss of quantization precision than traditional technologies (such as the KL method). According to an embodiment of the present disclosure, after obtaining a group of data to be quantized for a machine learning model, a plurality of pairs of truncation thresholds are used to quantize the group of data to be quantized respectively to determine a plurality of groups of quantized data, where each pair of truncation thresholds in the plurality of pairs of truncation thresholds includes an upper truncation and a lower truncation, and the upper truncation and the lower truncation in at least one pair of truncation thresholds in the plurality of truncation thresholds have different absolute values; in other words, a pair of asymmetrical truncation thresholds. Then, a difference between a mean value of an absolute value of each group of quantized data and a mean value of an absolute value of the group of data to be quantized is used as an evaluation index to select a suitable pair of truncation thresholds from the plurality of pairs of truncation thresholds. In this way, a pair of truncation thresholds that are more suitable for quantization may be found. In addition, compared with symmetric quantization, asymmetric quantization may further decrease the precision loss of quantization.

The basic principles and several example implementations of the present disclosure are described below with reference to FIG. 2- 1 to FIG. 2- 10. It should be understood that these exemplary embodiments are given only to enable those skilled in the art to better understand and then implement the embodiments of the present disclosure, but not to limit the scope of the present disclosure in any way.

FIG. 2- 1 is a schematic diagram of a processing system 2- 100 of a method used for data processing according to an embodiment of the present disclosure; As shown in FIG. 2- 1, the processing system 2- 100 includes a plurality of processors 2- 101-1, 2-101-2, 2- 101-3 (collectively referred to as processor 2- 101) and memory 2- 102. The processor 2- 101 is configured to execute an instruction sequence, and the memory 2- 102 is configured to store data. The processor 2-102 may include a random-access memory (RAM) and a register file. The plurality of processor 2- 101 in the processing system 2- 100 may share part of the storage space such as part of the RAM storage space and the register file, but may also have their own storage space at the same time.

It should be understood that various methods according to the embodiments of the present disclosure may be applied to any one processor of the processing system 2- 100 (such as an artificial intelligence chip) including a plurality of processors (multi-core). The processor may be a general-purpose processor, for example, a central processing unit (CPU) or an intelligence processing unit (IPU) for artificial intelligence computations. The artificial intelligence computations may include machine learning computations, brain-like computations, and the like. The machine learning computations may include neural network computations, k-means computations, support vector machine computations, and the like. The artificial intelligence processor may include one or more of, for example, a graphics processing unit (GPU), a neural-network processing unit (NPU), a digital signal processing (DSP) unit, and a field-programmable gate array (FPGA) chip. The present disclosure does not limit the specific types of the processors. In addition, the types of the plurality of processors in the processing system 100 may be the same or different, which is not limited in the present disclosure.

In a possible implementation, the processors mentioned in the present disclosure may include a plurality of processing units, and each processing unit may independently execute various assigned tasks, such as convolution computation task, pooling task, or fully connected task, and the like. The present disclosure does not limit the processing unit and the tasks executed by the processing unit.

FIG. 2- 2 is a schematic diagram of an exemplary architecture of a neural network 2-200 according to an embodiment of the present disclosure. A neural network (NN) is a mathematical model which imitates structures and functions of a biological neural network, and is computed by plenty of connected neurons. Therefore, a neural network is a computational model composed of plenty of connected nodes (or called "neurons"). Each node represents a specific output function called activation function. A connection between each two neurons represents a weighted value that passes through the connection signal and is called a weight. The weight may be viewed as "memory" of a neural network. An output of a neural network varies according to different connection methods between neurons, different weights, and different activation functions. A neuron is a basic unit of the neural network, which obtains a certain count of inputs and a bias. The certain count of inputs and the bias are multiplied by a weight when a signal (value) arrives. The connection refers to connecting one neuron to another neuron in another layer or a same layer, and the connection is accompanied by an associated weight. In addition, the bias is an extra input of the neuron, which is always 1 and has its own connection weight. This ensures that the neuron may be activated even if all inputs are empty (all 0).

In applications, if no non-linear function is applied to the neuron in the neural network, the neural network is only a linear function and is not powerful than a single neuron. If an output result of a neural network is between 0 and 1, for example, in a case of cat-dog identification, an output close to 0 may be regarded as a cat and an output close to 1 may be regarded as a dog. An activation function such as a sigmoid activation function is introduced into the neural network to realize the cat-dog identification. A return value of the activation function is a number between 0 and 1. Therefore, the activation function is configured to introduce non-linearity into the neural network, which may narrow down the range of a neural network computation result. In fact, how the activation function is represented is not important, and what is important is to parameterize a non-linear function by some weights, thus the non-linear function may be changed by changing the weights.

FIG. 2- 2 is a structural diagram of a neural network 2- 200. The neural network shown in FIG. 2- 2 contains three layers: an input layer 2- 210, a hidden layer 2- 220, and an output layer 2- 230. The hidden layer 2- 220 shown in FIG. 2- 2 contains three layers. Of course, the hidden layer 2- 220 may also include more or fewer layers, where the neuron in the input layer 2- 210 is called an input neuron. As a first layer in the neural network, the input layer needs to input signals (values) and transmits the signals (values) to a next layer. The input layer does not perform operations on the input signals (values), and has no associated weight or bias. The neural network shown in FIG. 2- 2 may receive four input signals (values).

The hidden layer 2- 220 is configured to apply different neurons (nodes) to the input data. A hidden layer is a representation of neurons arranged vertically. The neural network shown in FIG. 2- 2 contains three hidden layers. A first hidden layer contains four neurons (nodes), a second hidden layer contains six neurons, and a third hidden layer contains three neurons. Finally, the hidden layer transfers values to the output layer 2- 230. In the neural network 2- 200 shown in FIG. 2- 2, each of the neurons in the three hidden layers is fully connected, and each of the neurons in three hidden layers is connected with each neuron in the next layer. It should be noted that in some neural networks, hidden layers may not be fully connected.

The neurons of the output layer 2- 230 is called the output neurons. The output layer receives an output from the last hidden layer. Through the output layer 2- 230, the desired value and the desired range may be determined. In the neural network shown in FIG. 2- 2, the output layer contains three neurons, in other words, three output signals (values).

In practical applications, the function of the neural network is to train a large number of sample data (including input and output) in advance. After the training, the neural network is used to obtain an accurate output for the future input of the real environment.

Before the discussion of neural network training, a loss function needs to be defined. The loss function is a function that indicates how well the neural network performs on a particular task. The most direct way to do this is to pass each sample data along the neural network to get a number during the training process, and then calculate the difference between this number and the wanted actual number, and then square it. What is calculated is the distance between the predicted value and the true value, and training the neural network is to reduce this distance or the value of the loss function.

At the beginning of neural network training, the weight needs to be initialized randomly. It is apparent that an initialized neural network may not provide a good result. In the training process, if starting from an initialized neural network, a network with high precision may be obtained through training. At the same time, it is also hoped that at the end of the training, the function value of the loss function becomes particularly small.

The training process of a neural network includes two stages. The first stage is to perform a forward processing on a signal, which includes sending the signal from the input layer 2- 210 to the output layer 2- 230 through the hidden layer 2- 220. The second stage is to perform back propagation on a gradient, which includes propagating the gradient from the output layer 2-230 to the hidden layer 2- 220, and finally to the input layer 2- 210, and sequentially adjusting weights and biases of each layer in the neural network according to the gradient.

In the process of forward processing, an input value is input into the input layer 2- 210 in the neural network and an output (called a predicted value) is obtained from the output layer 2- 230 in the neural network. When the input value is input into the input layer 2- 210 in the neural network, the input layer does not perform any operation. In the hidden layer, the second hidden layer obtains a predicted intermediate result value from the first hidden layer to perform a computation operation and an activation operation, and then sends the obtained predicted intermediate result value to the next hidden layer. The same operations are performed in the following layers to obtain the output value in the output layer 2- 230 in the neural network.

After forward processing, an output value called the predicted value is obtained. In order to calculate an error produced in the forward process, the loss function is used to compare the predicted value with an actual output value to obtain the corresponding error. A chain rule of calculus is used in the back propagation. In the chain rule, derivatives of errors corresponding to the weights of the last layer in the neural network are calculated first. The derivatives are called gradients, which are then used to calculate the gradients of the penultimate layer in the neural network. The process is repeated until the gradient to each weight in the neural network is obtained. Finally, the corresponding gradient is subtracted from each weight, and then the weight is updated once to reduce the errors.

For a neural network, fine-tuning refers to loading a trained neural network. The process of fine-tuning also includes two stages, which are the same as those of training. The first stage is to perform the forward processing on a signal, and the second stage is to perform the back propagation on a gradient to update weights in the trained neural network. The difference between training and fine-tuning is that training refers to randomly processing an initialized neural network and starts from the beginning, while fine-tuning does not start from the beginning.

In the process of training or fine-tuning a neural network, weights in the neural network are updated based on gradients once every time the neural network performs a forward processing on a signal and performs a corresponding back propagation on the error, and the whole process is called an iteration. In order to obtain a neural network whose precision meets expectations, a very large sample data set is required during the training process. In this case, it is impossible to input the entire sample data set into a computer at once. Therefore, in order to solve the problem, the sample data set needs to be divided into a plurality of blocks and then each block of the sample data set is passed to the computer. After the forward processing is performed on each block of the sample data set, the weights in the neural network are correspondingly updated once. When the neural network performs a forward processing on a complete sample data set and returns a weight update correspondingly, the process is called an epoch. In practice, it is not enough to perform forward processing on a complete data set in the neural network only once. It is necessary to transmit the complete data set in the same neural network a plurality of times, in other words, a plurality of epochs is needed to obtain a neural network with expected precision.

In the process of neural network training or fine-tuning, it is usually hoped that the faster the better, and the higher the precision, the better. Since data in the neural network is represented in a high-precision data format such as floating-point numbers, all the data involved in the process of training or fine-tuning is in the high-precision data format and then the trained neural network is quantized. For example, when quantized objects are weights of a whole neural network and the quantized weights are 8-bit fixed-point numbers, since a neural network usually contains millions of connections, almost all the space is occupied by weights that are connected with neurons. The weights are different floating-point numbers. The weights of each layer tend to be normally distributed in a certain interval, such as (-3.0, 3.0). A maximum value and a minimum value corresponding to the weights of each layer in the neural network are stored, and the value of each floating-point number is represented by an 8-bit fixed-point number. The interval within the range of the maximum value and the minimum value is linearly divided into 256 quantization intervals, in which each quantization interval is represented by an 8-bit fixed-point number. For example, in an interval of (- 3.0, 3.0), byte 0 represents - 3.0 and byte 255 represents 3.0. Similarly, byte 128 represents 0.

For data represented in a high-precision data format such as a floating-point number, based on rules of computation representation of floating-point and fixed-point numbers according to a computer architecture, for a fixed-point computation and a floating-point computation of the same length, a floating-point computation model is more complex and needs more logic components to build a floating-point computation unit. In other words, a volume of the floating-point computation unit is larger than the volume of a fixed-point computation unit. Moreover, the floating-point computation unit needs to consume more resources to process, so that a gap of power consumption between the fixed-point computation unit and the floating-point computation unit is usually an order of magnitude. Therefore, the floating-point computation unit occupies many times more chip area and consumes many times more power than the fixed-point computation unit.

FIG. 2- 3 illustrates a schematic diagram of a process 2- 300 for data quantization according to an embodiment of the present disclosure; Referring to FIG. 2- 3, the input data 2-310 is a to-be-quantized floating-point number, such as a 32-bit floating-point number. If the input data 2- 310 is directly input to the neural network model 2- 340 for processing, more computing resources will be consumed, and the processing speed will be slower. Therefore, the input data may be quantized at block 2- 320 to obtain the quantized data 2- 330 (for example, the 8-bit integer). If the quantized data 2- 330 is input into the neural network model 2- 340 for processing, since the 8-bit integer calculation is faster, the neural network model 2- 340 will complete the processing of the input data faster and generate the corresponding output result 2-350.

During the quantization from the to-be-quantized input data 2- 310 to the quantized data 2- 330, some precision loss will be caused to a certain extent, and the degree of precision loss will directly affect the accuracy of the output result 2- 350. Therefore, in the quantization of the input data 2- 330, it is necessary to ensure that the precision loss in the quantization is minimal or as small as possible.

FIG. 2-4A shows a schematic diagram 2- 400 for quantizing data symmetrically according to an embodiment of the present disclosure; FIG. 2-4A shows the simplest symmetric quantization method. It directly selects the maximum absolute value of all the values in the data to be quantized, which is |max|, and then performs the quantization in the range of -|max| to |max| to generate quantized data. However, this method will cause low precision in the quantized data because of no truncating. At the same time, the symmetric quantization method may cause certain waste. For example, there are no data points around the quantized maximum value 127.

FIG. 2-4B is a schematic diagram 2- 450 for quantizing data symmetrically based on truncation thresholds according to an embodiment of the present disclosure. Different from the direct quantization method in FIG. 2-4A, a truncation threshold T is selected in FIG. 2-4B, and the data outside the range of -|T| to |T| will be set to -|T| or |T|. For example, in the example of FIG. 2-4B, the three values to be quantized in the circle 2- 460 are outside the truncation range, so they will be treated as a value -|T| for quantization and quantized to a data point 2- 470. The precision of the quantized data may be improved by using truncation threshold to narrow down the value range of the data to be quantized.

FIG. 2-4C shows a schematic diagram 2- 480 for quantizing data asymmetrically in an embodiment of the present disclosure; FIG. 2-4C shows a asymmetric quantization method: the maximum value |max| and the minimum value |min| in all the data to be quantized are selected directly, and quantized in the range from |min| to |max| to generate the quantized data. However, this method may cause low precision in the quantized data because of no truncating.

FIG. 2-4D is a schematic diagram 2- 490 for quantizing data asymmetrically based on truncation thresholds according to an embodiment of the present disclosure. Different from the direct quantization method in FIG. 2-4C, an upper truncation T and a lower truncation |min| are selected in FIG. 2-4D, and the data outside the range from |min| to |T| will be set as a |min| or a |T|. For example, in the example of FIG. 2-4D, the two values to be quantized in the circle 2-492 are outside the truncation range, so they will be treated as the value T for quantization and quantized to a data point 2- 495. By this way, the precision of the quantized data may be improved by using asymmetric upper truncation and lower truncation to narrow down the value range of the data to be quantized. However, how to obtain a pair of asymmetric truncation thresholds with the least loss of quantization precision is a technical problem that needs to be solved urgently.

FIG. 2- 5 illustrates a flowchart of a method 2- 500 for processing data according to an embodiment of the present disclosure; It should be understood that the method 2- 500 may be executed by one or more processors 2- 101 in FIG.2-1.

A group of data to be quantized for a machine learning model is obtained at block 2-502. For example, the input data 2- 310 to be quantized may be obtained by referring to FIG. 2-3, and the input data may be quantized, thereby speeding up the processing speed of the neural network model 2- 340. In addition, some parameters (such as weights) of the neural network model itself may also be quantized. By quantizing the network parameters, the size of the neural network model may be reduced. In some embodiments, the data to be quantized may be 32-bit floating-point number. Alternatively, the data to be quantized may also be floating-point numbers with other digits, or other data types.

At block 2-504, a plurality of pairs of truncation thresholds are used to quantize a group of data to be quantized respectively to determine a plurality of groups of quantized data, where each pair of truncation thresholds in the plurality of pairs of truncation thresholds includes an upper truncation and a lower truncation, and the upper truncation and the lower truncation in at least one pair of truncation thresholds in the plurality of truncation thresholds have different absolute values. In other words, at least one pair of asymmetric truncation thresholds is included in the plurality of pairs of truncation thresholds. In the asymmetric quantization solution, each pair of truncation thresholds includes the upper truncation and the lower truncation. Each pair of upper truncation and lower truncation is usually asymmetric; in other words, the absolute value of the upper truncation and the absolute value of the lower truncation are different. However, in some cases, one or more of the determined pairs of truncation thresholds may be symmetric, but at least one pair of truncation thresholds is asymmetric. In some embodiments, the lower truncation may not be the minimum value in the data to be quantized, but may be other values.

According to the embodiments of the present disclosure, the plurality of pairs of truncation thresholds may be selected to quantize the data to be quantized respectively. In some embodiments, some truncation thresholds may be selected at fixed intervals, for example, an upper truncation may be selected every predetermined distance according to the range from the maximum value to the minimum value in the data to be quantized, and the lower truncation may always be the minimum value of the data to be quantized. In some embodiments, only a few truncation thresholds at specific locations may be selected, for example, only select a few predetermined proportions of the maximum value as the upper truncation.

In some embodiments, the corresponding one or more quantization parameters may be calculated according to each pair of truncation thresholds, and then the calculated quantization parameters may be used to quantize the data to be quantized. Alternatively, the data to be quantized may also be directly quantized through various formulas or models according to the truncation threshold without separately calculating the value of each quantization parameter.

At block 2- 506, based on the difference between the mean value of the absolute value of each group of quantized data in the plurality of groups of quantized data and the mean value of the absolute value of the group of data to be quantized, a pair of truncation thresholds from the plurality of pairs of truncation thresholds is selected to quantize the group of data to be quantized. The inventors of the present application have discovered through research and a large number of experiments that the mean difference between the absolute values of the data before and after quantization may reflect the precision loss before and after quantization, where the smaller the mean absolute difference, the smaller the precision loss of the quantization operation. Therefore, the embodiments of the present disclosure use the difference of the mean values of the absolute values of the data before and after the quantization as an index for selecting the optimal truncation threshold, which may achieve a smaller precision loss than the traditional KL method.

In some embodiments, the difference between the mean value of the absolute value of the quantized data and the mean value of the absolute value of the data to be quantized may be the difference between the two absolute mean values. Alternatively, the difference between the mean value of the absolute value of the quantized data and the mean value of the absolute value of the data to be quantized may be: the difference between the two absolute mean values is divided by the mean value of the absolute value of the data to be quantized, and then take the absolute value.

In some embodiments, after selecting the best pair of truncation thresholds, the selected pair of truncation thresholds may be used to quantize a group of data to be quantized to obtain quantized data, including: truncating the data that are greater than the selected upper truncation in a group of data to be quantized to the upper truncation, and truncating the data that are less than the selected lower truncation in a group of data to be quantized to the lower truncation; and then the obtained quantized data is input to the neural network model for processing.

FIG. 2- 6 is a flow chart 2- 600 of a method for searching for truncation thresholds used for asymmetric quantization according to an embodiment of the present disclosure, and the method 2- 600 determines a pair of optimal asymmetric truncation thresholds based on the data to be quantized for data quantization.

At block 2- 602, the mean value of the absolute value of the data to be quantized Data_mean and the maximum value Data_max and the minimum value Data_min of the data to be quantized are determined. The mean value of the absolute value is the sum of the absolute values of all the data in the data to be quantized divided by the number of elements. In addition, the minimum mean difference is also initialized, for example, the maximum value in the floating-point number is initially set, and the search order i of the cyclic search is initialized (for example, initialized to zero). In some embodiments, the search order i may also be initialized to half of the total number of searches, in other words, the search starts from the middle, which may improve the search efficiency. According to the embodiments of the present disclosure, one or more rounds of the threshold search process may be set, and each round of the threshold search may have the same or different total number of searches. In some embodiments, the total number of searches of each round may be set in the range between 10 and 32. Generally speaking, the more the total number of searches, the longer the search time and the more precise the searched truncation threshold. However, when the total number of searches reaches a certain value, the search performance may no longer be substantially improved.

Next, the first round of coarse-grained truncation threshold search is started. FIG. 2-7A is a sample schematic diagram 2- 700 for searching for truncation thresholds used for asymmetric quantization in a coarse-grained manner according to an embodiment of the present disclosure. As shown in FIG. 2-7A, 10 candidate truncation thresholds may be determined in the data to be quantized (identified by the dotted line in FIG. 2-7A), and these 10 pairs of truncation thresholds may be used in turn (FIG. 2-7A only shows 10 upper truncations, and the lower truncation may always be the minimum value of the data to be quantized) to perform quantization. The optimal pair of truncation thresholds is determined according to the difference of the mean value of the absolute value of the data before and after the quantization. The inventors of the present application found that in the neural network model, the input data is usually concentrated in small values, and scattered in large values, so setting the lower truncation directly to the minimum value in the data to be quantized will not cause too much loss of precision and avoid the complicated process of selecting the lower truncation.

At block 2- 604, it is determined whether the search order i is less than the predetermined total number of searches search_grid, in other words, when each pair of truncation thresholds is selected in turn for quantization, it is determined whether all the calculations of the truncation threshold have been completed. If the search order i is less than the total number of searches, the pair of truncation thresholds is determined based on the current search order i at block 2-606. The upper truncation of the pair of truncation thresholds is, for example, Data_max-i*(Data_max-Data_min)/search_grid, and the lower truncation is directly the minimum value in the data to be quantized. Alternatively, the upper truncation of the search order i may be selected as Data max *(i+1)/search_grid.

At block 2- 608, this pair of truncation thresholds is used to quantize the data to be quantized to obtain the corresponding quantized data Quant_data_i, and then at block 2- 610, the difference Distance_i = abs (Quant_data_mean_i-Data_mean)/ Data_mean between the mean value of the absolute value of the quantized data Quant_data_mean_i and the mean value of the absolute value of the data to be quantized Data_mean is calculated.

At block 2- 612, it is determined whether the calculated difference Distance_i is less than the current minimum difference. If the calculated difference Distance-I is less than the current minimum difference, at block 2- 614, the calculated difference Distance i is set as the current minimum difference, and the truncation threshold when the difference is the smallest is recorded, and then the search order i is incremented at block 616. If it is judged at block 2-612 that the calculated difference Distance-I is not less than the current minimum difference, the search order i (i++) is directly incremented at block 2- 616; in other words, the difference of the next pair of truncation thresholds is determined. Next, the steps 2- 604 to 2- 616 are circulated until the value of the search order i reaches the total number of searches, then exit the first round of the search process of the truncation threshold at block 2- 618. As shown in FIG. 2-7A, after the first round of search, it is determined that the difference corresponding to the upper truncation at the dotted line 2- 770 is the smallest. It may be seen that the process of truncation threshold search is: using the plurality of pairs of truncation thresholds to quantize the data to be quantized, and determining the group of quantized data that has the smallest difference in the mean absolute value of the plurality of groups of quantized data and the data to be quantized, and then selecting a pair of truncation thresholds corresponding to this group of quantized data from the plurality of pairs of truncation thresholds.

Optionally, a second round of fine-grained truncation threshold search process may be performed. The second round of search process may also refer to method 2- 600, except that the second round of search is within a certain range around the first round of optimal upper truncation 2- 770 (for example, the previous upper truncation and the next upper truncation of selected upper truncation 2- 770) is performed, which is a further refinement of the first round of search results. For example, in the second round of searching, the interval between each upper truncation may be ((Data_max - Data_min)*2)/(search_grid1*search_grid2), where a search_grid1 denotes the total number of searches in the first round, and a search_grid2 demotes the total number of searches in the second round. FIG. 2-7B is a schematic diagram 2-750 for searching for truncation thresholds used for asymmetric quantization in a fine-grained manner according to an embodiment of the present disclosure. Referring to FIG.2-7B, the optimal fine-grained upper truncation is determined as 2- 772, and the minimum value 2- 778 in the data to be quantized may be selected as the lower truncation. Through the two-round search method, a more precise truncation threshold may be obtained, and the precision loss caused by quantization may be further decreased.

FIG. 2- 8 illustrates a flowchart of a method 2- 800 for iteratively search for the best truncation threshold according to an embodiment of the present disclosure; At block 2-802, three pairs of truncation thresholds are determined. For example, the maximum value Data max and the minimum value Data min of all the data in the data to be quantized $\_F_x$ may be determined. If $Z_{max}$ equals Data max and $Z_{min}$ equals Data_min, the three pairs of truncation thresholds may be (Data_min , Data_max /2), (Data_min, Data max *3/4) and (Data_min, Data_max). At block 2- 804, the three pairs of truncation thresholds are used to respectively quantize the data to be quantized $F_x$ to obtain the quantized data $\widehat{F_x1}$ , $\widehat{F_x2}$ , $\widehat{F_x3}$ , and then the mean values $F_{mean}$, $\widehat{F_{1mean}}$, $\widehat{F_{2mean}}$, $\widehat{F_{3mean}}$ of the absolute value corresponding to the data $F_x$, $\widehat{F_x1}$ , $\widehat{F_x2}$ , $\widehat{F_x3}$ are calculated respectively. Then the minimum difference diff_min is selected according to the formula $\text{diff} = \text{abs}\left(\frac{F_{mean} - \widehat{F_{mean}}}{\widehat{F_{mean}}}\right)$ . At block 2- 806, it is determined whether the minimum difference diff min is less than the predetermined threshold. If not, then at block 2- 808, three pairs of truncation thresholds are re-determined based on the selected pair of truncation thresholds (set the value corresponding to the minimum difference diff_min as the new maximum value), and the above process are repeated until the minimum difference diff min is less than the predetermined threshold, and then the iterative process of the truncation threshold is exited at block 2- 810. In some embodiments, in addition to the iteration stopping condition that the minimum difference diff min is less than a predetermined threshold, other iteration stopping conditions may also be set, such as the maximum number of iterations, reaching the predetermined minimum interval and so on. In addition, although the method 2-800 of FIG. 2- 8 shows iteratively selecting the best pair of truncation thresholds, it may also not to perform iteration, but only perform once, and then directly use the pair of truncation thresholds corresponding to the smallest difference diff min as the final truncation threshold to determine quantization parameters, thereby completing data quantization.

In some embodiments, the quantization parameters when using each pair of truncation thresholds to quantize data may be determined by the following equations (1)-(4),

$$\widehat{F_x} = round(\frac{F_x}{2^s \times f}) \times 2^s \times f \qquad (1).$$

$$o = \frac{Z_{min} + Z_{max}}{2} \qquad (2).$$

$$S = ceil\left( log_2 \left( \frac{Z_{max} - Z_{min}}{2(2^{n-1} - 1)} \right) \right) \qquad (3).$$

$$f = \frac{Z_{max} - Z_{min}}{2(2^{n-1} - 1) * 2^s} \qquad (4).$$

In these formulas, n represents the number of binary digits after quantization, o, S and f represent quantization parameters, and ceil represents rounding up.

According to the embodiments of the present disclosure, quantization parameters o1, S1, f1, o2, S2, f2, o3, S3, and f3 may be obtained by selecting $Z_{max}$ as Data_max/2, Data_max*3/4, and Data_max respectively, thereby obtaining the quantized data $\widehat{F_x1}$ , $\widehat{F_x2}$ , $\widehat{F_x3}$ . Correspondingly, after selecting a pair of truncation thresholds, o, S and f corresponding to the pair of truncation thresholds are directly taken as the quantization parameters of the data to be quantized.

It should be noted that above mentioned embodiments, for the sake of conciseness, are all described as a series of action combinations, but those skilled in the art should know that the present disclosure is not limited by the described order of action since some steps may be performed in a different order or simultaneously according to the present disclosure. Secondly, those skilled in the art should also understand that the embodiments described in the specification are all optional, and the actions and units involved are not necessarily required for this disclosure.

It should be further noted that although the steps in the flowchart are displayed in sequence as indicated by the arrows, these steps are not necessarily executed in the order indicated by the arrows. Unless there is a clear description in this article, there is no strict order for the execution of these steps, and these steps may be executed in other orders. Moreover, at least part of the steps in the flowchart may include a plurality of sub-steps or a plurality of stages, which are not necessarily executed at the same time, but may be executed at different times. The execution of these sub-steps or stages is not necessarily performed sequentially, but may be performed alternately with other steps or sub-steps of other steps or at least a part of the stages.

FIG. 2- 9 illustrates a diagram of a apparatus 2- 900 for processing data according to an embodiment of the present disclosure. As shown in FIG. 2- 9, the apparatus 2- 900 includes a data to be quantized obtaining unit 2- 910, a quantized data determining unit 2- 920, and a truncation threshold selecting unit 2- 930. The data to be quantized obtaining unit 2-901 is configured to obtain a group of data to be quantized for machine learning model. The quantized data determining unit 2-920 is used to quantize a group of data to be quantized respectively through a plurality of pairs of truncation thresholds to determine a plurality of groups of quantized data, where each pair of truncation thresholds in the plurality of pairs of truncation thresholds includes an upper truncation and a lower truncation, and the upper truncation and the lower truncation in at least one pair of truncation thresholds in the plurality of truncation thresholds have different absolute values. The truncation threshold selecting unit 2- 930 is configured to select a pair of truncation threshold from the plurality of pairs of truncation thresholds to quantize a group of data to be quantized based on the difference between the mean value of the absolute value of each group of quantized data in the plurality of groups of quantized data and the mean value of the absolute value of a group of data to be quantized.

In addition, the data to be quantized obtaining unit 2- 910, the quantized data determining unit 2- 920, and the truncation threshold selecting unit 2- 930 in the apparatus 2-900 may also be configured to perform steps and/or actions according to various embodiments of the present disclosure.

It should be understood that the foregoing apparatus embodiments are only illustrative, and the apparatus of the present disclosure may also be implemented in other ways. For example, the division of the units/modules in the foregoing embodiment is only division of logical function, and there may be other division methods in actual implementation. For example, a plurality of units, modules, or components may be combined together or integrated into another system, or some features may be ignored or not implemented.

In addition, unless specified, each functional units/modules in each embodiments of the present disclosure may be integrated into one unit/module. Alternatively, each unit/module may exist alone physically, or two or more units/modules may be integrated together. The above-mentioned integrated units/modules may be implemented in the form of hardware or in the form of software program units.

When the above-mentioned integrated units/modules are implemented in the form of hardware, the hardware may be a digital circuit, an analog circuit, and the like. Physical implementation of the hardware structure may include, but is not limited to, a transistor, a memristor, and the like. Unless specified, the artificial intelligence processor may be any appropriate hardware processor, such as a CPU, a GPU, an FPGA, a DSP, an ASIC, and the like. Unless specified, the storage unit may be any suitable magnetic storage medium or magneto-optical storage medium, such as an RRAM (resistive random-access memory), a DRAM (dynamic random-access memory), an SRAM (static random-access memory), an EDRAM (enhanced dynamic random-access memory), an HBM (high-bandwidth memory), an HMC (hybrid memory cube), and the like.

If the integrated units/modules are implemented in the form of software program units and sold or used as an independent product, they may be stored in a computer-readable memory. Based on such understanding, the essence of the technical solutions of the present disclosure, or a part of the present disclosure that contributes to the prior art, or all or part of the technical solutions may be embodied in the form of a software product. The software product is stored in a memory, which includes several instructions to enable a computer device (which may be a personal computer, a server, or a network apparatus, and the like.) to perform all or part of the steps of the methods described in each embodiment of the present disclosure. The foregoing memory includes: a USB flash drive, a read-only memory (ROM), a random-access memory (RAM), a mobile hard disk, a magnetic disk or an optical disc, and other media that may store program codes.

An embodiment provides a readable storage medium, on which a computer program is stored, and when the computer program is executed, methods of each embodiment according to the present disclosure is implemented.

In an embodiment, an artificial intelligence chip including the above-mentioned data processing apparatus is disclosed.

An embodiment provides a board card, which includes a storage component, an interface apparatus, a control component, and the above-mentioned artificial intelligence chip. The artificial intelligence chip is connected to the storage component, the control component, and the interface apparatus respectively. The storage component is used to store data; the interface apparatus is used to realize data transmission between the artificial intelligence chip and an external device. The control component is used to monitor state of the artificial intelligence chip.

FIG. 2- 10 shows a structural block diagram of a board card 2-1000 according to an embodiment of the present disclosure. Referring to FIG. 2- 10, the above-mentioned board card 2- 1000 may include other supporting apparatuses in addition to a chip 2- 1030-1 and a chip2-1030-2 (collectively referred to as chips 2- 1030), and the supporting apparatuses include, but are not limited to: a storage component 2- 1010, an interface apparatus 2- 1040 and a control component 2- 1020. The interface apparatus 2- 1040 may be connected to an external device 2-1060. The storage component 2- 1010 is connected to the artificial intelligence chip 2- 1030 through a bus 2- 1050 for storing data. The storage component 2- 1010 may include a plurality of groups of storage units 1- 1010-1 and 2- 1010-2. Each group of storage units is connected to the artificial intelligence chip through the bus. 2- 1050 It may be understood that each group of the storage units may be a DDR SDRAM (double data rate synchronous dynamic random-access memory).

DDR does not need to increase clock frequency to double a speed of SDRAM. DDR allows data to be read on the rising and falling edges of the clock pulse. The speed of DDR is twice that of a standard SDRAM. In an embodiment, the memory apparatus may include 4 groups of storage units. Each group of storage units may include a plurality of DDR4 particles (chips). In an embodiment, four 72-bit DDR4 controllers may be arranged inside the artificial intelligence chip, where 64bit of each 72-bit DDR4 controller is for data transfer and 8bit is for ECC (error correcting code). It may be understood that when each group of the storage units adopts DDR4-3200 particles, the theoretical bandwidth of data transmission may reach 25600MB/s.

In an embodiment, each group of the storage units include a plurality of DDR SDRAMs arranged in parallel. DDR may transfer data twice per clock cycle. A DDR controller may be arranged inside the chip to control the data transmission and data storage of each storage unit.

The interface apparatus may be electrically connected to the artificial intelligence chip. The interface apparatus is configured to realize data transfer between the artificial intelligence chip and an external device (such as a server or a computer). For example, in an embodiment, the interface apparatus may be a standard PCIE interface. For example, data to be processed is transferred from the server to the chip through a standard PCIE interface to realize data transfer. Alternatively, when a PCIe 3.0 X 16 interface is adopted for transferring, the theoretical bandwidth may reach 16000MB/s. In another embodiment, the interface apparatus may also be another interface. The present disclosure does not restrict a specific form of other interfaces as long as the interface unit may realize the transferring function. In addition, a computation result of the artificial intelligence chip may still be transferred by the interface apparatus to an external device (such as a server).

The control component is electrically connected to the artificial intelligence chip. The control component is configured to monitor a state of the artificial intelligence chip. Specifically, the artificial intelligence chip and the control component may be electrically connected through an SPI interface. The control component may include an MCU (Microcontroller unit). If the artificial intelligence chip includes a plurality of processing chips, a plurality of processing cores, or a plurality of processing circuits, the chip is capable of driving a plurality of loads. In this case, the artificial intelligence chip may be in different working states such as a multi-load state and a light-load state. The working state of the plurality of processing chips, the plurality of processing cores, and/or a plurality of processing circuits may be regulated and controlled by the control component.

In a possible implementation, an electronic device including the above-mentioned artificial intelligence chip is disclosed. The electronic device includes a data processing apparatus, a robot, a computer, a printer, a scanner, a tablet computer, a smart terminal, a mobile phone, a traffic recorder, a navigator, a sensor, a webcam, a server, a cloud-based server, a camera, a video camera, a projector, a watch, a headphone, a mobile storage, a wearable device, a vehicle, a household appliance, and/or a medical device.

The vehicle includes an airplane, a ship, and/or a car; the household electrical appliance may include a television, an air conditioner, a microwave oven, a refrigerator, an electric rice cooker, a humidifier, a washing machine, an electric lamp, a gas cooker, and a range hood; and the medical device may include a nuclear magnetic resonance spectrometer, a B-ultrasonic scanner, and/or an electrocardiograph.

In the above-mentioned embodiments, descriptions of each embodiment have their own emphasis. For parts that are not described in detail in an embodiment, reference may be made to related descriptions of other embodiments. The technical features of the above embodiments may be combined arbitrarily. In order to make the description concise, all possible combinations of the technical features in the above embodiments are not described. However, as long as there is no contradiction in the combination of these technical features, they should be considered in the range described in this specification.

The foregoing contents may be better understood according to the following articles:

A1. A method for processing data, comprising:

obtaining a group of data to be quantized for a machine learning model;

quantizing the group of data to be quantized respectively through using a plurality of pairs of truncation thresholds to determine a plurality of groups of quantized data, wherein each pair of truncation thresholds in the plurality of pairs of truncation thresholds includes an upper truncation and a lower truncation, and the upper truncation and the lower truncation in at least one pair of truncation thresholds in the plurality of truncation thresholds have different absolute values; and

selecting a pair of truncation thresholds from the plurality of pairs of truncation thresholds based on the difference between the mean value of the absolute value of each group of quantized data and the mean value of the absolute value of a group of data to be quantized to quantize a group of data to be quantized.

A2. The method of article A1, wherein determining a plurality of groups of quantized data includes:

determining a maximum value and a minimum value of all data in the group of the data to be quantized; and
determining the plurality of pairs of truncation thresholds based on the maximum value and the minimum value.

A3. The method of article A2, wherein determining a plurality of groups of quantized data further includes:

determining a first upper truncation based on the maximum value, a predetermined total number of searches, and the current search order;
quantizing the group of data to be quantized through using a first pair of truncation thresholds to determine a first group of quantized data, wherein the first pair of truncation thresholds includes a first upper truncation and a lower truncation that is the same as the minimum value; and
determining a first difference between a mean value of an absolute value of the first group of quantized data and the mean value of the absolute value of the group of data to be quantized.

A4. The method of article A3, wherein determining a plurality of groups of quantized data includes:

incrementing the current search order;
determining a second upper truncation based on the maximum value, a predetermined total number of searches, and the current search order;
quantizing the group of data to be quantized through using a second pair of truncation thresholds to determine a second group of quantized data, wherein the second pair of truncation thresholds includes a second upper truncation and a second lower truncation that is the same as the minimum value; and
determining a second difference between a mean value of an absolute value of the second group of quantized data and the mean value of the absolute value of the group of data to be quantized.

A5. The method of any of article A1-A4, wherein selecting a pair of truncation thresholds from a plurality of pairs of truncation thresholds includes:

determining, from the plurality of groups of quantized data, a group of quantized data that has a smallest difference with the group of data to be quantized in terms of mean value of absolute value; and
selecting a pair of truncation thresholds corresponding to the group of quantized data from the plurality of pairs of truncation thresholds.

A6. The method of article A5, further comprising:

determining a truncation search range associated with the selected pair of truncation thresholds;
determining a plurality of new pairs of truncation thresholds within the truncation search range;
determining, from the plurality of groups of quantized data, a group of quantized data that has a smallest difference with the group of data to be quantized in terms of mean value of absolute value; and
selecting a new pair of truncation thresholds from the plurality of new pairs of truncation thresholds based on a difference between the mean value of the absolute value of the group of data to be quantized and a mean value of an absolute value of each group of quantized data in the plurality of new groups of quantized data.

A7. The method of article A1, wherein determining a plurality of groups of quantized data includes:

determining a maximum value and a minimum value of all data in the group of the data to be quantized;
determining three pairs of truncation thresholds based on the maximum value and the minimum value, wherein among the three pairs of truncation thresholds, a first pair of truncation thresholds includes the minimum value and a half of the maximum value, and a second pair of truncation thresholds includes the minimum value and three-quarters of the maximum value, and a third pair of truncation thresholds includes the maximum value and the minimum value; and

quantizing the group of data to be quantized respectively through using the three pairs of truncation thresholds to determine three groups of quantized data.

A8. The method of article A7, wherein electing the pair of truncation thresholds from the plurality of pairs of truncation thresholds includes:

executing the following actions iteratively until a stop condition is met:

selecting the pair of truncation thresholds from the three pairs of truncation thresholds;

determining whether a difference corresponding to the selected pair of truncation thresholds is less than a predetermined threshold;

stopping the iterative execution of the actions in response to the difference being less than a predetermined threshold; and

determining the three pairs of truncation thresholds in response to the difference being greater than the predetermined threshold based on the selected pair of truncation thresholds.

A9. The methods of any of article A1-A8, wherein the group of data to be quantized is a group of floating-point numbers in the neural network model, and the method further includes:

quantizing the group of data to be quantized using the selected pair of truncation thresholds to obtain quantized data, wherein quantizing the group of data to be quantized includes: setting a value that is greater than a selected upper truncation in the group of data to be quantized as the upper truncation, and setting a value that is less than a selected lower truncation in the group of data to be quantized as the lower truncation; and

inputting the obtained quantized data to the neural network model for processing.

A10. An apparatus for data processing, comprising:

a data to be quantized obtaining unit configured to obtain a group of data to be quantized for a machine learning model;

a quantized data determining unit configured to quantize a group of data to be quantized respectively through using a plurality of pairs of truncation thresholds to determine a plurality of groups of quantized data, wherein each pair of truncation thresholds in the plurality of pairs of truncation thresholds includes an upper truncation and a lower truncation, and the upper truncation and the lower truncation in at least one pair of truncation thresholds in the plurality of truncation thresholds have different absolute values; and

a truncation threshold selecting unit configured to select a pair of truncation thresholds from the plurality of pairs of truncation thresholds based on a difference between a mean value of an absolute value of each group of quantized data in the plurality of groups of quantized data and a mean value of an absolute value of the group of data to be quantized to quantize the group of data to be quantized.

All. The apparatus of article A10, wherein the quantized data determining unit includes:

a maximum value and minimum value determining unit that is configured to determine a maximum value and a minimum value of all data in the group of data to be quantized; and

a plurality of pairs of truncation thresholds determining unit, which is configured to determine the plurality of pairs of truncation thresholds based on the maximum value and the minimum value.

A12. The apparatus of article A11, wherein the quantized data determining unit, further includes:

a first upper truncation determining unit configured to determine a first upper truncation based on the maximum value, a predetermined total number of searches, and a current search order;

a first group of quantized data determining unit configured to quantize the group of data to be quantized through using a first pair of truncation thresholds to determine a first group of quantized data, wherein the first pair of truncation thresholds includes a first upper truncation and a first lower truncation that is the same as the minimum value; and

a first difference determining unit configured to determine a first difference between a mean value of an absolute value of the first group of quantized data and the mean value of the absolute value of the group of data to be quantized

A13. The apparatus of article A12, wherein the quantized data determining unit, further includes:

an incrementing unit configured to increment the current search order;
a second upper truncation determining unit configured to determine a second upper truncation based on the maximum value, the predetermined total number of searches, and the current search order;
a second group of quantized data determining unit configured to quantize the group of data to be quantized by using a second pair of truncation thresholds to determine a second group of quantized data, wherein the second pair of truncation thresholds includes a second upper truncation and a second lower truncation that is the same as the minimum value; and
a second difference determining unit configured to determine a second difference between a mean value of an absolute value of the second group of quantized data and the mean value of the absolute value of the group of data to be quantized.

A14. The method of any of article A10-A13, wherein the truncation threshold selecting unit includes:

a minimum difference selecting unit configured to determine, from the plurality of groups of quantized data, a group of quantized data that has a smallest difference with the group of data to be quantized in terms of mean value of absolute value; and
a second truncation threshold selecting unit to select a pair of truncation thresholds corresponding to the group of quantized data from the plurality of pairs of truncation thresholds.

A15. The apparatus of article A14, further comprising:

a truncation search range determining unit configured to determine a truncation search range of associated with the selected pair of truncation thresholds;
a new plurality-of-pairs-of-truncation-thresholds determining unit configured to determine a plurality of new pairs of truncation thresholds within the truncation search range;
a second quantized data determining unit configured to quantize the group of data to be quantized respectively by using the plurality of new pairs of truncation thresholds to determine a plurality of new groups of quantized data; and
a third truncation threshold selecting unit configured to select a new pair of truncation thresholds from the plurality of new pairs of truncation thresholds based on based on a difference between the mean value of the absolute value of the group of data to be quantized and a mean value of an absolute value of each group of quantized data in the plurality of new groups of quantized data.

A16. The apparatus of article A10, wherein the quantized data determining unit includes:

a maximum value and minimum value determining unit that is configured to determine the maximum value and the minimum value of all data in the group of the data to be quantized;
a three-pairs-of-truncation-thresholds determining unit configured to determine three pairs of truncation thresholds based on the maximum value and the minimum value, wherein among the three pairs of truncation thresholds, a first pair of truncation thresholds includes the minimum value and a half of the maximum value, and a second pair of truncation thresholds includes the minimum value and three-quarters of the maximum value, and a third pair of truncation thresholds includes the maximum value and the minimum value; and
a three-groups-of-quantized-data determining unit configured to quantize the group of data to be quantized respectively by using the three pairs of truncation thresholds to determine three groups of quantized data.

A17. The apparatus of article A16, wherein the truncation threshold selecting unit includes:
an iteration unit configured to execute the following actions iteratively until a stop condition is met:

selecting the pair of truncation thresholds from the three pairs of truncation thresholds;
determining whether a difference corresponding to the selected pair of truncation thresholds is less than a predetermined threshold;
stopping the iterative execution of the actions in response to the difference being less than the predetermined threshold; and
redetermining the three pairs of truncation thresholds in response to the difference being greater than the predetermined threshold based on the selected pair of truncation thresholds.

A18. The apparatus of any of article A10-A17, wherein the group of data to be quantized is a group of floating-point numbers in the neural network model, and the apparatus further includes:

a data quantization unit configured to quantize the group of data to be quantized using the selected pair of truncation thresholds to obtain quantized data, wherein quantizing the group of data to be quantized includes: setting a value that is greater than a selected upper truncation in the group of data to be quantized as the upper truncation, and setting a value that is less than a selected lower truncation in the group of data to be quantized as the lower truncation; and
a data input unit configured to input the obtained quantized data to the neural network model for processing.

A19. A computer readable storage medium, on which a computer program is stored, and when the program is executed, the method of any one of articles A1-A9 is realized.

A20. An artificial intelligence chip, comprising the data processing apparatus of any one of article A10-A18.

A21. An electronic device, comprising the artificial intelligence chip of article A20.

A22. A board card, comprising: a storage component, an interface apparatus, a control component, and the artificial intelligence chip of article A20,

wherein the artificial intelligence chip is respectively connected to the storage component, the control component, and the interface apparatus;
the storage component is configured to store data;
the interface apparatus is configured to realize data transmission between the artificial intelligence chip and an external device; and
the control component is configured to monitor a state of the artificial intelligence chip.

A23. The board card of article A22, wherein

the storage component includes: a plurality of groups of storage units, where each group of storage units is connected to the artificial intelligence chip through a bus, and the storage units are DDR SDRAMs (double data rate synchronous dynamic random-access memory);
the artificial intelligence chip includes: a DDR controller configured to control data transfer and data storage of each storage unit; and
the interface apparatus is a standard PCIe interface.

The embodiments of the present disclosure are described in detail above, and specific examples are used to illustrate principles and implementations of the present disclosure. The descriptions of the above embodiments are only used to help understand the methods and core ideas of the present disclosure. Persons of ordinary skill in the art may change or transform the implementation and application scope according to the ideas of the present application. The changes and transformations shall all fall within the protection scope of the present disclosure. In summary, the content of this specification should not be construed as a limitation on the present disclosure.

The present disclosure relates to the technical field of computer technology, and specifically to a method and an apparatus for processing data and related products.

With the development of computer technology, deep learning algorithms are more and more used to handle various complex tasks. Using deep learning algorithms to process data has achieved good results in searching technology, data mining, machine learning, machine translation, natural language processing, multimedia learning, speech, recommendation and personalization technology and other related fields.

With the increasing number of network layers and increasing computational complexity, improving the computing ability of device is very important for the development of deep learning. Therefore, people use various methods to improve the computing ability of the device. However, there are still many problems that need to be solved in improving computing ability in the process of machine learning.

To solve the above problem, the following technical solutions are provided.

Technical solutions in embodiments of the present disclosure will be described clearly and completely hereinafter with reference to the accompanied drawings in the embodiments of the present disclosure. Obviously, the embodiments to be described are merely some rather than all embodiments of the present disclosure. All other embodiments obtained by those skilled in the art based on the embodiments of the present disclosure without creative efforts shall fall within the protection scope of the present disclosure.

It should be understood that terms such as "first", "second", "third", and "fourth" appear in the articles, the specification, and drawings are used for distinguishing different objects rather than describing a specific order. It should be understood that the terms "including" and "comprising" used in the specification and the article indicate the presence of a feature, an entity, a step, an operation, an element, and/or a component, but do not exclude the existence or addition of one or more other features, entities, steps, operations, elements, components, and/or collections thereof.

It should also be understood that terms used in the specification of the present disclosure are merely for the purpose of describing particular embodiments rather than limiting the present disclosure. As being used in the specification and the article of the disclosure, unless the context clearly indicates otherwise, the singular forms "a", "an", and "the" are intended to include the plural forms. It should also be understood that the term "and/or" used in the specification and the article refers to any and all possible combinations of one or more of relevant listed items and includes these combinations.

As being used in this specification and the article, the term "if' may be interpreted as "when", or "once" or "in response to a determination" or "in response to a case where something is detected" depending on the context. Similarly, depending on the context, the clause "if it is determined that" or "if [a described condition or event] is detected" may be interpreted as "once it is determined that", or "in response to a determination", or "once [a described condition or event] is detected", or "in response to a case where [a described condition or event] is detected".

With the development of neural network algorithms, there are more and more network layers in the neural network. This development trend leads to higher computational complexity. In addition, this development trend of neural networks requires a greater development in the computing ability of computing devices. In some cases, due to a limitation of computing resources, the limited computing resources will not be well used to process neural network algorithms.

Generally, data processed in the computing device is 32-bit floating-point data. When a large number of such floating-point data is to be processed, the computing device is required to provide strong computing power and large storage space to store these data. In addition, the large number of data transmitted during the transmission process will also affect the processing efficiency of the machine learning model.

In order to solve at least one existing problem, the present disclosure proposes a method for processing data. The processing data related to the neural network is distributed into predetermined number of intervals, and then the optimal truncation threshold is selected based on the average value of the data. The truncation data threshold is used to truncate the data, and the data is quantized from the high-precision format to the low-precision format. For example, the 32-bit floating-point data may be converted to 8-bit integer data. The method in the present disclosure may ensure the precision of data processing as high as possible while reducing the number of data processing. In addition, the method may also help to significantly reduce the number of data transmission, thereby greatly accelerating data exchange among a plurality of computing devices.

FIG. 3- 1 illustrates a schematic diagram of an example environment 3- 100 in which a device and/or a method is implemented according to embodiments of the present disclosure may be implemented.

The example environment 3- 100 includes a plurality of pieces of data 3- 102 associated with a machine learning model. Each of the plurality of pieces of data 3- 102 has a same high-precision format. The precision format of the data 3- 102 is only relative to the precision of the plurality of pieces of data 3- 104 after conversion. FIG. 3- 1 shows that the plurality of pieces of data 3- 102 are, for example, 32-bit floating-point data. The number of data bits of the plurality of pieces of data 3- 102 in FIG. 3- 1 is 32 bits, which is only illustrative, and is not a limitation of the disclosure. The data 3 - 102 may be data in any suitable relatively high-precision format, such as 64-bit double-precision data or data with any suitable precision required.

In some embodiments, the machine learning model is a neural network model. The neural network model includes, but is not limited to, a convolutional neural network model, a recurrent neural network model and so on.

In some embodiments, the plurality of pieces of data 3- 102 associated with the machine learning model may be weight values, input neuron data, output neuron data, and/or offset values of the machine learning model. The above examples are only used to describe the present disclosure, but not to specifically limit the present disclosure. The plurality of pieces of data 3- 102 associated with the machine learning model may be any related data used or to be processed in the machine learning model.

The plurality of pieces of data 3- 102 associated with the machine learning model is processed by a computing device to be converted into a plurality of pieces of data 3 - 104 in a low-precision format. As shown in FIG. 3- 1, the plurality of pieces of data 3- 102 is converted from floating-point data in a 32-bit high-precision format to a plurality of 8-bit integer data 3- 104 in a low-precision format. Each of the plurality of pieces of data 3- 104 is represented by 8 bits. Therefore, the plurality of pieces of data 3 - 104 may represent a range from -128 to 127. It should be understood that the low-precision format of the plurality of pieces of data 3- 104 is only related to the precision format of the data 3- 102 before the conversion. The use of 8 data bits for each of the plurality of pieces of data 3 - 104 shown in FIG. 3- 1 is only an example, but is not a specific limitation to the present disclosure. Therefore, the precision format of the plurality of pieces of data 3- 104 may be any suitable data type lower than the precision format of the plurality of pieces of data 3 - 102.

Computing device used to convert data in high-precision formats into low-precision formats include, but are not limited to, personal computers, server computers, handheld or laptop device, mobile device (such as mobile phones, personal digital assistants (PDAs), and media players and so on.), multi-processor systems, consumer electronic products, small computers, large computers, distributed computing environments including any of the above systems or devices, and the like.

In the process of converting the plurality of pieces of data 3- 102 into the plurality of pieces of data 3- 104 by the computing apparatus, The maximum value of the absolute value of the data in the plurality of pieces of data 3- 102 is determined first. Then the entire range from 0 to the maximum is divided into a predetermined number N of a group of intervals. The plurality of pieces of data 3- 102 is distributed into the group of intervals according to their absolute values. The predetermined number N may be any suitable value. In some embodiments, the predetermined number N is greater than the maximum value of the data in the low-precision format. For example, when 8 bits are used to represent an integer, the maximum value represented by 8 bits is 127. Therefore, the predetermined number N may be a value greater than 127, such as 256, 528, 1024, and 2048.

The computing device determines a first average value of the plurality of pieces of data before the interval conversion. The computing device also forms a mapping unit for the first j intervals in the group of intervals, where j is a positive integer greater than 0, and j starts with a value M that less than N and changes to N, then N-M+1 mapping units may be formed. In some embodiments, M equals the maximum value represented by the data in the low-precision format adds one. In the example of the above-mentioned data 3- 102, for example, M equals 127 add 1; in other words, M equals 128.

The computing device may respectively map the N-M+1 mapping units to the second group of intervals of the second number that are divided based on the number of bits of the data in the low-precision format to determine a second average value of the mapped data according to corresponding mapping units. For each mapping unit, the computing device may obtain the second average value of the data mapped to the second group of intervals. For each mapping unit, the computing device may determine a difference between the first average value and the second average value. In an embodiment, a mapping unit with the smallest difference value is determined. In other words, a value of j is determined. According to the value of j, the truncation threshold may be determined. Then the data is truncated. In other words, the data that is greater than the truncation threshold among the plurality of pieces of data is modified to the truncation threshold. Then a scale value is determined based on the truncation value. For the plurality of pieces of data that have been truncated, the scale value is used to perform scaling processing to convert the data into the plurality of pieces of data 3 - 104 that have the second data format.

After converting the plurality of pieces of data 3- 102 into the plurality of pieces of data 3- 104, the plurality of pieces of data 3- 104 may be provided to the machine learning model for processing 3- 106.

FIG. 3- 1 illustrates a schematic diagram of an example environment 3- 100 in which a device and/or a method is implemented according to an embodiment of the present disclosure. The following describes a process 3- 200 for processing data according to an embodiment of the present disclosure with reference to FIG. 3- 2. FIG. 3- 2 illustrates a flowchart of the process 3- 200 for processing data according to an embodiment of the present disclosure.

As shown in FIG. 3- 2, at block 3- 202, the computing device obtains the plurality of pieces of data for the machine learning model, and the plurality of pieces of data is represented in the first data format. As shown in FIG. 3- 1, each data in the plurality of pieces of data 3- 102 obtained by the computing device is in a 32-bit floating-point format. The 32-bit floating-point format of each of the plurality of pieces of data 3- 102 in FIG. 3- 1 is only for example, and is not a specific limitation to the present disclosure.

In some embodiments, the plurality of pieces of data used for the machine learning model are weight values, input neuron data, output neuron data, and/or offset values in the machine learning model. The above examples are only used to describe the present disclosure, but not to specifically limit the present disclosure. The plurality of pieces of data used for the machine learning model may be any related data used in the machine learning model.

At block 3- 204, the computing device distributes the plurality of pieces of data in the first group of intervals based on the values of the plurality of pieces of data, where the number of the first group of intervals is predetermined. In order to quantize data, the data is generally distributed into the predetermined number of intervals determined in advance. In some embodiments, the number N of data intervals may be set to any suitable number, for example, 256, 1024, or 2048. Alternatively or additionally, the number N of data intervals may be selected to be greater than the largest integer represented by the converted data type. For example, when the data to be converted is an 8-bit integer, the largest integer represented by the 8-bit integer is 127. Therefore, a number greater than 127 may be selected as the interval number. For example, the number N of data intervals may be 256, 512, 1024, or 2048.

After determining the number N of intervals to be divided, the data with the largest absolute value among the plurality of pieces of data is determined, and the entire data interval between 0 and the maximum absolute value is divided into a first group of intervals including N intervals.

At block 3- 206, the computing device determines the first average value of the plurality of pieces of data. To measure the accuracy of the conversion, the present disclosure uses a difference between the average value of the data before the conversion and the average value of the data after the conversion to measure the accuracy of the conversion. Therefore, it is necessary to calculate the average value of plurality of pieces of data before the conversion.

In some embodiments, when the computing device calculates the average value of the received plurality of pieces of data, the computing device first determines the absolute value of the plurality of pieces of data and the number of the plurality of pieces of data. Then, the computing apparatus determines the average value based on the absolute value and the number of data in the plurality of pieces of data. For example, the absolute values of all the data are added and then divided by the number of the absolute values to determine the first average value of the data to be processed.

In some embodiments, when the computing apparatus calculates the first average value of the received plurality of pieces of data, the computing apparatus determines an intermediate value of each interval in the first group of intervals and the number of the data of each interval. In order to facilitate the calculation, the intermediate value of each interval is used as the average value of the data in the interval. Then, the computing device determines the average value based on the intermediate value of each interval and the number of the data of each interval. More specifically, the computing device multiplies the intermediate value of each interval by the number of data of each interval, then adds them together, and then divides them by the total number of data to determine the first average value of the data.

In some embodiments, when determining the first average value of the plurality of pieces of data, the first average value is associated with the corresponding mapping units. The computing device first determines the number of data of each interval and the intermediate value of each interval in the mapping units, where one of the mapping units corresponds to the j intervals starting from the first interval in the first group of intervals and takes the last interval of the j intervals as the end interval. Then the data in the interval behind the end interval in the first group of intervals are put in the end interval. In other words, the number of the data in the end interval of the mapping unit at this time is the sum of the number of the data in the interval corresponding to the end interval in the first group of intervals and the number of data in all the intervals after the interval. Then, the computing device determines the first average value based on the number of data of each interval and the intermediate value of each interval.

At block 3- 208, the computing device maps the data distributed in the first group of intervals to the second group of intervals according to the plurality of different mapping units for determining the second average value of the mapped data according to the corresponding mapping unit, where the mapping unit includes a predetermined number of continuous intervals starting from the first interval of the first group of intervals, and the end interval of the mapping unit is distributed with data larger than or located in the end interval among the plurality of pieces of data, and the number of intervals in the second group of intervals is relative to the second data format, and the accuracy of the second data format is lower than that of the first data format.

After the plurality of pieces of data is divided into the first group of intervals, the first j intervals from the first group of intervals are selected as the mapping units, and the value of j ranges from a value M that is less than N to the total number of N in the first group of intervals. Therefore, there are N-M+1 mapping units. In some embodiments, the value of M is greater than the maximum value represented by the data in the low-precision format. In an embodiment, when the data in the low-precision format is 8 bits, the maximum value it represents is 127, and M takes 128.

The computing device then respectively maps the N-M+1 mapping units to the second group of intervals of the second number that may be represented by the data in the low-precision format. In an embodiment, if the format of the plurality of pieces of data 3 - 104 in FIG. 3- 1 is the 8-bit integer, the intervals in each mapping unit may be mapped to 128 intervals in the second group of intervals. Therefore, the j/128 intervals in the mapping units are mapped to one interval in the second group of intervals.

Then, for each mapping unit, the computing device may obtain the second average value of the data mapped to the second interval. After mapping to the second interval, for each mapping unit, the average value after the mapping is determined by an intermediate value of intervals in the second group of intervals and the number of intervals located in the interval. For example, the intermediate value of each interval in the second interval is multiplied by the number of data in each interval, and then divided by the total number of data to obtain the second average value.

At block 3- 210, the computing device processes the plurality of pieces of data based on the first average value and the plurality of second average values, so that the processed plurality of pieces of data is represented in the second data format. The processing of the plurality of pieces of data will be described in detail below with reference to FIG. 3- 3.

Through the above method, the data in the high-precision format may be converted into the data in the low-precision format for processing. Since the number of bits used to represent the data is reduced, the computing resources used to process the data may be reduced. At the same time, since the mapping unit with the smallest difference from the average value of the data before the conversion is selected from the plurality of mapping units, the accuracy of processing results may be retained as much as possible.

FIG. 3- 2 above describes a flowchart of a process 3- 200 for processing data according to an embodiment of the present disclosure. The process for processing data at block 3- 210 in FIG. 3- 2 is described below with reference to FIG. 3- 3. FIG. 3- 3 illustrates a flowchart of a process 3- 300 for processing data according to an embodiment of the present disclosure.

At block 3- 302, the computing device determines a plurality of differences related to the plurality of mapping units based on the first average value and the plurality of second average values. After obtaining the first average value of the received plurality of pieces of data and the second average value corresponding to each mapping unit, the computing apparatus may determine the difference between the first average value and each second average value. Therefore, the computing device may obtain the plurality of differences corresponding to the plurality of mappings.

In one example, the entire interval from 0 to the maximum absolute value of the plurality of pieces of data is divided into 2048 intervals. When changing the plurality of pieces of data from the first precision format to the 8-bit integer, j changes from 128 to 2047 to select the first j+1 intervals from 2048 intervals as the mapping unit. As described above, a first average value mean1 of the plurality of pieces of data may be obtained. Each j value corresponds to the mapping unit, and the data in the interval after the mapping unit is put into the last interval of the j+1 intervals of the mapping unit. Then the j+1 intervals are mapped to 128 second intervals, and then the intermediate value of each interval in the 128 second intervals and the number of data of each interval in the second interval are determined. Then the product of the intermediate value of each interval in j+1 intervals and the number of data of the interval are added together, and then divided by the total number of data to determine a second average value mean2. For each mapping unit, differences of the average value after interval truncation processing is mean1 -mean2.

At block 3- 304, the truncation threshold that used to plurality of pieces of data is determined based on the plurality of differences. The computing device determines the mapping unit corresponding to the smallest difference among the plurality of differences based on the plurality of differences. In an example, after obtaining the plurality of differences, the computing device separately divides each of the plurality of differences by their corresponding first average value to obtain a plurality of difference rates. The mapping unit with the smallest difference rate is used as a selected mapping unit. In one example, after obtaining the plurality of differences, the computing device may select the mapping unit corresponding to the smallest differences among the plurality of differences as the selected mapping unit.

After determining the mapping unit based on the plurality of differences, the value of j is determined. Then the value of j may be used to determine the truncation threshold. In an example, the truncation threshold may be determined by the following formula (1):

$$\text{threshold} = (\text{best\_j} + 0.5) * \frac{1}{N} \text{absmax} \qquad (1).$$

In this formula, best_j is the number of intervals of the mapping unit corresponding to the determined minimum difference or difference rate, N represents the number of intervals in the first group of divided intervals, and absmax represents the maximum absolute value of the plurality of pieces of data.

At block 3- 306, the computing device truncates the obtained plurality of pieces of data based on the truncation threshold. After obtaining the truncation threshold, the computing device regulates values that greater than the truncation threshold of the plurality of pieces of data as the truncation threshold.

At block 3- 308, the computing apparatus determines the scale value related to the mapping unit based on the truncation threshold. In an example, after selecting the mapping unit corresponding to the threshold difference, the computing device determines the truncation threshold for the plurality of pieces of received data based on the number of intervals corresponding to the mapping unit. Then, the truncation threshold is used to determine the scale value through the following formula (2).

$$\text{scale} = \text{threshold}/(2^{n-1} - 1) \qquad (2).$$

In this formula, n represents the number of bits of data in the second data format.

In an example, when the converted data is the 8-bit integer, scale equals threshold divided by 127. The above examples are only used to illustrate the present disclosure, but not to specifically limit the present disclosure.

Optionally, at block 310, the computing device performs the scaling processing on the plurality of pieces of truncated data based on the scale value, and then obtains the plurality of pieces of data in the second data format. In some embodiments, the scaling processing of plurality of pieces of data may also be performed on other computing devices.

Through the above method, the optimal truncation threshold may be found when the data is converted from the first data format to the second data format, and an error between the data before and after the data format conversion may be minimized.

In an embodiment, the plurality of pieces of data represented in the first data format, for example, in the 32-bit floating-point number format, for the machine learning model is obtained. In order to reduce the number of data, the plurality of pieces of data is converted into the second data format, such as 8-bit integer data. The maximum absolute value absmax is found from the plurality of pieces of data. Then the interval from 0 to the absolute maximum value is divided into 2048 intervals. Before the conversion, the plurality of pieces of data is distributed into the 2048 intervals according to the absolute value.

Then the number of plurality of pieces of data distributed in each interval of the 2048 intervals is counted. For example, bin[i] represents the number of the plurality of pieces of data whose absolute values fall between i/2048 absmax ~ (i+1)/2048 absmax, which means the number of the plurality of pieces of data whose absolute values fall in the i+lth interval, where bin[ 0] represents the number of plurality of pieces of data whose absolute values fall within a first interval 0-1/2048 absmax.

At this time, the first average value of plurality of pieces of data may be determined. In an example, the first average value mean1 of the plurality of pieces of data is determined by adding the absolute values of the plurality of pieces of data and then dividing by the number of the plurality of pieces of data. In an example, the first average value mean1 of plurality of pieces of data may be obtained by multiplying the intermediate value of each interval by the number of data of each interval and then adding the products for all intervals, and dividing by the number of data. In some examples, the first average value mean1 may be determined when determining each mapping unit.

j is set as the number of intervals corresponding to the mapping unit. In the case that the second data format is the8-bit integer, j changes from 128 to 2047, and j takes each value from 128 to 2047, which corresponds to one mapping unit.

For each value of j, in bin_before[0]=bin[0], bin_before[1]=bin[1],...,bin_before[j-2]=bin[j-2], which are the previous j-1 intervals, the number of data remains unchanged. For $\sum_{j-1}^{2047}$ , the number of data distributed in the j intervals, is the sum of the number of data originally distributed in the interval j and after the interval j.

At this time, after the data interval is truncated, the average value of the data after the interval truncation may be used as the first average value. After interval truncation, for each interval, the intermediate value is multiplied by the number of data of the interval, and then the products of each interval are added, and then divide by the total number of data to determine the first average value meanl for each mapping unit.

For each value of j corresponding to each mapping unit, bin_before[0], bin_before[1],...,bin_before[j-1] are compressed to bin_next[0], bin_next[1],...,bin_next[127]. In other words, the j/128 bin_before corresponds to one bin_next. Then an average value of a plurality of intervals after adjustment is calculated. In other words, the average value mean2 of the second group of intervals corresponding to the mapping unit may be get by multiplying the intermediate value of each interval by the number of data in each interval, and then divided the sum of the products of all intervals by the total number of data. The difference mean1-mean2 between the first average value and the second average value may then be determined.

The difference rate between the first average value mean1 and the second average value mean2 is calculated through the following formula (3):

$$\text{diff\_mean} = abs(mean1{-}mean2)/mean1 \quad (3).$$

In this formula, abs(mean1-mean2) represents the absolute value of (meanl-mean2).

J is changed from 128 to 2047, each j value has a corresponding diff mean, and the j value corresponding to the smallest diff mean from all j values is selected. After determining the value of j, the truncation threshold may be determined through the above formula (1). Then the plurality of pieces of data is truncated. After the truncation processing, the plurality of pieces of data may be quantized through the above formula (2).

It should be noted that above mentioned embodiments, for the sake of conciseness, are all described as a series of action combinations, but those skilled in the art should know that the present disclosure is not limited by the described order of action since some steps may be performed in a different order or simultaneously according to the present disclosure. Secondly, those skilled in the art should also understand that the embodiments described in the specification are all optional, and the actions and units involved are not necessarily required for this disclosure.

It should be further noted that although the steps in the flowchart are displayed in sequence as indicated by the arrows, these steps are not necessarily executed in the order indicated by the arrows. Unless there is a clear description in this article, there is no strict order for the execution of these steps, and these steps may be executed in other orders. Moreover, at least part of the steps in the flowchart may include a plurality of sub-steps or a plurality of stages, which are not necessarily executed at the same time, but may be executed at different times. The execution of these sub-steps or stages is not necessarily performed sequentially, but may be performed alternately with other steps or sub-steps of other steps or at least a part of the stages.

FIG. 3- 4 shows an apparatus 3- 400 for processing data, including an obtaining unit 3- 402, a distribution unit 3- 404, a first average value determining unit 3- 406, a first mapping unit 3- 408, and an execution unit 3- 410. The obtaining unit 3- 402 is configured to obtain the plurality of pieces of data for the machine learning model, and the data is represented in the first data format. The distribution unit 3 - 404 is configured to distribute the plurality of pieces of data to the first group of intervals based on the values of the plurality of pieces of data, and the number of the first group of intervals is predetermined. The first average value determining unit 3- 406 is configured to determine the first average value of the data. The first mapping unit 3- 408 is configured to map the data distributed in the first group of intervals into the second group of intervals according to the plurality of different mapping units to determine the second average value of the mapped data according to the corresponding mapping unit, where the mapping unit includes the predetermined number of consecutive intervals starting from the first interval of the first group of intervals, and the end interval of the mapping unit is distributed with the plurality of pieces of data that is larger than or located in the end interval, and the number of intervals in the second group of intervals is related to the second data format, and the accuracy of the second data format is lower than the first data format. The execution unit 3- 410 is configured to process the plurality of pieces of data based on the first average value and the plurality of second average values, so that the plurality of pieces of processed data is expressed in the second data format.

In some embodiments, the first mapping unit 3- 408 includes a redistribution unit configured to redistribute data in the plurality of pieces of data that are greater than the end interval of the mapping unit to the end interval of the mapping unit; and a second mapping unit configured to map the plurality of mapping units to the second group of intervals respectively for determining the second average value of the mapped data according to the corresponding mapping units.

In some embodiments, the execution unit 3- 410 includes: a difference determining unit configured to determine the plurality of difference values related to the plurality of mapping units based on the first average value and the plurality of second average values; a truncation threshold determining unit configured to determine the truncation threshold for the plurality of pieces of data based on the plurality of differences; a truncation unit configured truncate the plurality of pieces of data obtained based on the truncation threshold; and a scale value determining unit configured to determine the scale value related to the mapping unit based on the truncation threshold.

In some embodiments, the execution unit 3- 410 further includes a scale unit that is configured to scale the truncated plurality of pieces of data based on the scale value.

In some embodiments, the apparatus further includes an interval determining unit configured to determine the first group of intervals related to the plurality of pieces of data based on the maximum absolute value of the data.

In some embodiments, the first average value determining unit 3 - 406 includes an absolute value and number determining unit configured to determine the absolute value of the data in the plurality of pieces of data and the number of the plurality of pieces of data, and a second average value determining unit configured to determine the average value based on the absolute value of the data in the plurality of pieces of data and the number.

In some embodiments, the first average value determining unit 3- 406 includes a first intermediate value and number determining unit configured to determine the intermediate value of each interval and the number of data of each interval in the first group of intervals; and a third average value determining unit configured to determine the average value based on the intermediate value and the number.

In some embodiments, the first average value determining unit 3- 406 includes: a second intermediate value and number determining unit configured to determine the number of data located in each interval of the mapping unit and the intermediate value of each interval; and a fourth average value determining unit configured to determine the first average value based on the number and the intermediate value.

In some embodiments, the number of intervals in the second group of intervals is determined based on the number of bits related to the second data format.

It should be understood that the foregoing apparatus embodiments are only illustrative, and the apparatus of the present disclosure may also be implemented in other ways. For example, the division of the units/modules in the foregoing embodiment is only division of logical function, and there may be other division methods in actual implementation. For example, a plurality of units, modules, or components may be combined together or integrated into another system, or some features may be ignored or not implemented.

In addition, unless specified, each functional units/modules in each embodiments of the present disclosure may be integrated into one unit/module. Alternatively, each unit/module may exist alone physically, or two or more units/modules may be integrated together. The above-mentioned integrated units/modules may be implemented in the form of hardware or in the form of software program units.

When the above-mentioned integrated units/modules are implemented in the form of hardware, the hardware may be a digital circuit, an analog circuit, and the like. Physical implementation of the hardware structure may include, but is not limited to, a transistor, a memristor, and the like. Unless specified, the artificial intelligence processor may be any appropriate hardware processor, such as a CPU, a GPU, an FPGA, a DSP, an ASIC, and the like. Unless specified, the storage unit may be any suitable magnetic storage medium or magneto-optical storage medium, such as an RRAM (resistive random-access memory), a DRAM (dynamic random access memory), a SRAM (static random-access memory), an EDRAM (enhanced dynamic random access memory), an HBM (high-bandwidth memory), an HMC (hybrid memory cube), and the like.

If the integrated units/modules are implemented in the form of software program units and sold or used as an independent product, they may be stored in a computer-readable memory. Based on such understanding, the essence of the technical solutions of the present disclosure, or a part of the present disclosure that contributes to the prior art, or all or part of the technical solutions may be embodied in the form of a software product. The software product is stored in a memory, which includes several instructions to enable a computer device (which may be a personal computer, a server, or a network apparatus, and the like.) to perform all or part of the steps of the methods described in each embodiment of the present disclosure. The foregoing memory includes: a USB flash drive, a read-only memory (ROM), a random-access memory (RAM), a mobile hard disk, a magnetic disk or an optical disc, and other media that may store program codes.

In a possible implementation, an artificial intelligence chip including the above-mentioned data processing apparatus is disclosed.

A possible implementation manner discloses a board card, which includes a storage component, an interface apparatus, a control component, and the above-mentioned artificial intelligence chip. The artificial intelligence chip is connected to the storage component, the control component and the interface apparatus respectively. The storage component is used to store data, and the interface apparatus is used to realize data transmission between the artificial intelligence chip and an external device. The control component is used to monitor state of the artificial intelligence chip.

FIG. 3- 5 shows a structural block diagram of a board card 3- 500 according to an embodiment of the present disclosure. Referring to FIG. 3- 5, the board card may include other supporting apparatuses in addition to chips 3- 506-1-3-506-n (where N is a positive integer and may be collectively referred to as chips 506 for ease of description). The supporting apparatuses include but are not limited to a storage component 3- 502, an interface apparatus 3- 507 and a control component 3- 504.

The storage component 3- 502 is connected to the artificial intelligence chip through a bus 3- 505 for storing data. The storage component may include a plurality of groups of storage units 3- 503-1,..., 3-503-N, where N is a positive integer. The storage units may be collectively referred to as storage units 3- 503 for ease of description. Each group of the storage units 3- 503 and the artificial intelligence chip 3- 506 are connected by the bus 3- 505. It may be understood that each group of the storage units 3- 503 may be a double data rate synchronous dynamic random access memory (DDR SDRAM).

DDR does not need to increase the clock frequency to double the speed of SDRAM. DDR allows data to be read on the rising and falling edges of the clock pulse. The speed of DDR is twice that of a standard SDRAM. In an embodiment, the memory apparatus may include 4 groups of storage units. Each group of storage units may include a plurality of DDR4 particles (chips). In an embodiment, four 72-bit DDR4 controllers may be arranged inside the artificial intelligence chip, where 64bit of each 72-bit DDR4 controller is for data transfer and 8bit is for ECC (error correcting code). It may be understood that when each group of the storage units adopts DDR4-3200 particles, the theoretical bandwidth of data transmission may reach 25600MB/s.

In an embodiment, each group of the storage units include a plurality of DDR SDRAMs arranged in parallel. DDR may transfer data twice per clock cycle. A DDR controller may be arranged inside the chip to control the data transmission and data storage of each storage unit.

The interface apparatus 3- 507 is electrically connected to the artificial intelligence chip 3- 506. The interface apparatus 3- 507 is used to implement data transmission between the artificial intelligence chip and an external device 3- 501 (for example, a server or a computer). For example, in an embodiment, the interface apparatus 3- 507 may be a standard PCIe interface. For example, data to be processed is transferred from the server to the chip through a standard PCIe interface to realize data transfer. Alternatively, when a PCIe 3.0 X 16 interface is adopted for transferring, the theoretical bandwidth may reach 16000MB/s. In another embodiment, the interface apparatus 3- 507 may also be other interfaces. The present disclosure does not limit the specific manifestations of other interfaces mentioned above, and the interface unit only needs to be able to realize the switching function. In addition, the calculation result of the artificial intelligence chip 3- 506 is still transmitted by the interface apparatus 3- 507 back to an external device 3- 501 (for example, a server).

The control component 3- 504 is electrically connected to the artificial intelligence chip 3- 506. The control component 3- 504 is used to monitor the state of the artificial intelligence chip 3- 506. Specifically, the artificial intelligence chip 3- 506 and the control component 3- 504 may be electrically connected through an SPI interface. The control component may include an MCU (Microcontroller unit). For example, the artificial intelligence chip 3- 506 may include a plurality of processing chips, a plurality of processing cores, or a plurality of processing circuits, and may drive a plurality of loads. Therefore, the artificial intelligence chip 3- 506 may be in different working states such as a multi-load state and a light-load state. The working states of the plurality of processing chips, the plurality of processing cores, or a plurality of processing circuits may be regulated and controlled by the control component.

In a possible implementation, an electronic device including the above-mentioned artificial intelligence chip is disclosed. The electronic device includes a data processing apparatus, a robot, a computer, a printer, a scanner, a tablet computer, a smart terminal, a mobile phone, a traffic recorder, a navigator, a sensor, a webcam, a server, a cloud-based server, a camera, a video camera, a projector, a watch, a headphone, a mobile storage, a wearable device, a vehicle, a household appliance, and/or a medical device.

The vehicle includes an airplane, a ship, and/or a car; the household electrical appliance may include a television, an air conditioner, a microwave oven, a refrigerator, an electric rice cooker, a humidifier, a washing machine, an electric lamp, a gas cooker, and a range hood; and the medical device may include a nuclear magnetic resonance spectrometer, a B-ultrasonic scanner, and/or an electrocardiograph.

In the above-mentioned embodiments, descriptions of each embodiment have their own emphasis. For parts that are not described in detail in an embodiment, reference may be made to related descriptions of other embodiments. The technical features of the above embodiments may be combined arbitrarily. In order to make the description concise, all possible combinations of the technical features in the above embodiments are not described. However, as long as there is no contradiction in the combination of these technical features, they should be considered in the range described in this specification.

The foregoing contents may be better understood according to the following articles:

Article A1, a method for processing data, comprising: obtaining a plurality of pieces of data for a machine learning model, wherein the data is represented in a first data format; distributing the plurality of pieces of data in a first group of intervals based on the value of the plurality of pieces of data, wherein the number of the first group of intervals is predetermined; determining a first average value of the plurality of pieces of data; mapping the data distributed in the first group of intervals into a second group of intervals according to a plurality of different mapping units to determine a second average value of the mapped data according to the corresponding mapping unit, wherein the mapping unit includes a predetermined number of consecutive intervals starting from a first interval of the first group of intervals, and an end interval of the mapping unit is distributed with data larger than or located in the end interval among the plurality of pieces of data; the number of intervals in the second group of intervals is related to a second data format, and the precision of the second data format is lower than that of the first data format; and processing the plurality of pieces of data based on the first average value and a plurality of second average values, so that the processed plurality of pieces of processed data is represented in the second data format.

Article A2, the method of article A1, wherein mapping the data distributed in the first group of intervals to the second group of intervals according to a plurality of different mapping units includes: redistributing data in the plurality of pieces of data that is larger than the end interval of the mapping unit to the end interval of the mapping unit; and mapping a plurality of mapping units to the second group of intervals respectively to determine the second average value of the mapped data according to the corresponding mapping unit.

Article A3, the method of article A1, wherein processing the plurality of pieces of data includes: determining a plurality of differences related to the plurality of mapping units based on the first average value and the plurality of second average values; determining a truncation threshold used for the plurality of pieces of data based on the plurality of differences; truncating the obtained plurality of pieces of data based on the truncation threshold; and determining a scale value related to the mapping unit based on the truncation threshold.

Article A4, the method of article A1, wherein processing the plurality of pieces of data further comprises scaling the truncated plurality of pieces of data based on the scale value.

Article A5, the method of article A1, further comprising: determining the first group of intervals related to the plurality of pieces of data based on a maximum absolute value of data.

Article A6, the method of article A1, wherein determining the first average value of the plurality of pieces of data includes: determining an absolute value of the data in the plurality of pieces of data and the number of the plurality of pieces of data; and determining the average value based on the absolute value of the data in the plurality of pieces of data and the number of the plurality of pieces of data.

Article A7, the method of article A1, wherein determining the first average value of the plurality of pieces of data includes: determining an intermediate value of each interval in the first group of intervals and the number of data in each interval; and determining the average value based on the intermediate value and the number.

Article A8, the method of article A1, wherein determining the first average value of the plurality of pieces of data includes: determining the number of data in each interval of the mapping unit and the intermediate value of each interval; and determining the first average value based on the number and the intermediate value.

Article A9, the method of article A1, wherein the number of intervals in the second group of intervals is determined based on the number of bits related to the second data format.

Article A10, an apparatus for processing data, comprising: an obtaining unit configured to obtain a plurality of pieces of data for machine learning model, where the data is represented in a first data format;

a distribution unit configured to distribute the plurality of pieces of data in a first group of intervals based on values of the plurality of pieces of data, wherein the number of the first group of intervals is predetermined; a first average value determining unit configured to determine a first average value of the plurality of pieces of data; a first mapping unit configured to map the data distributed in the first group of intervals to a second group of intervals according to a plurality of different mapping units for determining a second average value of the mapped data according to the corresponding mapping unit, wherein the mapping unit includes a predetermined number of consecutive intervals starting from a first interval of the first group of intervals, wherein an end interval of the mapping unit is distributed with data in the plurality of pieces of data that is greater than or located in the end interval; the number of intervals in the second group of intervals is related to a second data format, wherein the precision of the second data format is lower than that of the first data format; and an execution unit configured to process the plurality of pieces of data based on the first average value and the plurality of second average values so that the processed plurality of pieces of data is represented in the second data format.

Article A11, the apparatus of article A10, wherein the first mapping unit includes: a redistribution unit configured to redistribute data in the plurality of pieces of data that is greater than the end interval of the mapping unit to the end interval of the mapping unit; and a second mapping unit configured to map the plurality of mapping units to the second group of intervals respectively to determine the second average value of the mapped data according to the corresponding mapping unit.

Article A12, the apparatus of article A10, wherein the execution unit includes: a difference determining unit configured to determine a plurality of differences related to the plurality of mapping units based on the first average value and the plurality of the second average values; a truncation threshold determining unit configured to determine a truncation threshold used for the plurality of pieces of data based on the plurality of differences; a truncation unit configured to truncate the obtained plurality of pieces of data based on the truncation threshold; and a scale value determining unit configured to determine a scale value related to the mapping unit based on the truncation threshold.

Article A13, the apparatus of article A12, wherein the execution unit further includes a scale unit configured to scale the truncated plurality of pieces of data based on the scale value.

Article A14, the apparatus of article A10, further comprising: an interval determining unit configured to determine the first group of intervals related to the plurality of pieces of data based on a maximum absolute value of the data.

Article A15, the apparatus of article A10, wherein the first average value determining unit includes: an absolute value and number determining unit configured to determine absolute values of data in the plurality of pieces of data and the number of the plurality of pieces of data; and a second average value determining unit configured to determine the average value based on the absolute value of data in the plurality of pieces of data and the number of the plurality of pieces of data.

Article A16, the apparatus of article A10, wherein the first average value determining unit includes: a first intermediate value and number determining unit configured to determine an intermediate value of each interval in the first group of intervals and a number of data in each interval; and

a third average value determining unit configured to determine the average value based on the intermediate value and the number.

Article A17, the apparatus of A10, wherein the first average value determining apparatus includes: a second intermediate value and number determining unit configured to determine the number of data located in each interval of the mapping unit and an intermediate value of each interval; and a fourth average value determining unit configured to determine the first average value based on the number and the intermediate value.

Article A18. The apparatus of article A10, wherein the number of intervals in the second group of intervals is determined based on a number of bits related to the second data format.

Article A19, an artificial intelligence chip, comprising a processor and a memory, wherein the memory stores computer program instructions, and the processor runs the computer program instructions in the memory to control the artificial intelligence chip to execute any one of methods in A1-A9.

Article A20, an electronic device, comprising the artificial intelligence chip of article A19.

Article A21, a board card, comprising: a storage component, an interface apparatus, a control component, and the artificial intelligence chip of article A19, wherein the artificial intelligence chip is respectively connected to the storage component, the control component and the interface apparatus; the storage component is used to store data; the interface apparatus is used to implement data transmission between the artificial intelligence chip and an external device; and the control component is used to monitor a state of the artificial intelligence chip.

Article A22, the board card of article A21, wherein the memory apparatus comprises: a plurality of groups of storage units, wherein each group of the storage units is connected to the artificial intelligence chip through a bus, and the storage unit is a double data rate synchronous dynamic random-access memory (DDR SDRAM); the artificial intelligence chip includes a DDR controller configured to control the data transmission and data storage of each storage unit; and the interface apparatus, which is a standard PCIe interface.

The embodiments of the present disclosure are described in detail above, and specific examples are used to illustrate principles and implementations of the present disclosure. The descriptions of the above embodiments are only used to help understand the methods and core ideas of the present disclosure. Persons of ordinary skill in the art may change or transform the implementation and application scope according to the ideas of the present application. The changes and transformations shall all fall within the protection scope of the present disclosure. In summary, the content of this specification should not be construed as a limitation on the present disclosure.

**Claims**

1.  A method for processing data, comprising:

    obtaining a group of data to be quantized for a machine learning model;
    quantizing the group of data to be quantized respectively through using a plurality of pairs of truncation thresholds to determine a plurality of groups of quantized data, wherein each pair of truncation thresholds in the plurality of pairs of truncation thresholds includes a truncation positive value and a truncation negative value that are symmetrical; and
    selecting a pair of truncation thresholds from the plurality of pairs of truncation thresholds based on a difference between a mean value of an absolute value of each group of quantized data in the plurality of groups of quantized data and a mean value of an absolute value of the group of data to be quantized to quantize the group of data to be quantized.

2.  The method of claim 1, wherein determining the plurality of groups of quantized data includes:

    determining a maximum absolute value of all data in the group of data to be quantized; and
    determining the plurality of pairs of truncation thresholds based on the maximum absolute value.

3.  The method of claim 2, wherein determining the plurality of groups of quantized data further includes:

    determining a first truncation positive value based on the maximum absolute value, a predetermined total number of searches, and a current search order;
    quantizing the group of data to be quantized through using a first pair of truncation thresholds to determine a first group of quantized data, wherein the first pair of truncation thresholds includes a first truncation positive value and a first truncation negative value that is opposite to the first truncation positive value; and
    determining a first difference between a mean value of an absolute value of the first group of quantized data and the mean value of the absolute value of the group of data to be quantized.

4.  The method of claim 3, wherein determining the plurality of groups of quantized data further includes:

    incrementing the current search order;
    determining a second truncation positive value based on the maximum absolute value, the predetermined total number of searches, and the current search order;
    quantizing the group of data to be quantized through using a second pair of truncation thresholds to determine a second group of quantized data, wherein the second pair of truncation thresholds includes the second truncation positive value and a second truncation negative value that is opposite to the second truncation positive value; and
    determining a second difference between a mean value of an absolute value of the second group of quantized data and the mean value of the absolute value of the group of data to be quantized.

5.  The method of any one of claims 1-4, wherein selecting the pair of truncation thresholds from the plurality of pairs of truncation thresholds includes:

    determining, from the plurality of groups of quantized data, a group of quantized data that has a smallest difference with the group of data to be quantized in terms of mean value of absolute value; and
    selecting a pair of truncation thresholds corresponding to the group of quantized data from the plurality of pairs of truncation thresholds.

6.  The method of claim 5, further comprising:

    determining a truncation search range associated with the selected pair of truncation thresholds;
    determining a plurality of new pairs of truncation thresholds within the truncation search range;
    quantizing the group of data to be quantized respectively through using the plurality of new pairs of truncation thresholds to determine a plurality of new groups of quantized data; and
    selecting a new pair of truncation thresholds from the plurality of new pairs of truncation thresholds based on a difference between the mean value of the absolute value of the group of data to be quantized and a mean value of an absolute value of each group of quantized data in the plurality of new groups of quantized data.

7. The method of claim 1, wherein quantizing the group of data to be quantized respectively through using the plurality of pairs of truncation thresholds to determine the plurality of groups of quantized data includes:

determining a maximum absolute value of all data in the group of data to be quantized;
determining three pairs of truncation thresholds based on the maximum absolute value, wherein among the three pairs of truncation thresholds, a first pair of truncation thresholds includes a half of the maximum absolute value and an opposite value of the half of the maximum absolute value, and a second pair of truncation thresholds includes three-quarters of the maximum absolute value and an opposite value of the three-quarters of the maximum absolute value, and a third pair of truncation thresholds includes the maximum absolute value and an opposite value of the maximum absolute value; and
quantizing the group of data to be quantized respectively through using the three pairs of truncation thresholds to determine three groups of quantized data.

8. The method of claim 7, wherein selecting the pair of truncation thresholds from the plurality of pairs of truncation thresholds includes:
executing the following actions iteratively until a stop condition is met:

selecting the pair of truncation thresholds from the three pairs of truncation thresholds;
determining whether a difference corresponding to the selected pair of truncation thresholds is less than a predetermined threshold;
stopping the iterative execution of the actions in response to the difference being less than the predetermined threshold; and
redetermining the three pairs of truncation thresholds in response to the difference being greater than the predetermined threshold based on the selected pair of truncation thresholds.

9. The method of any one of claims 1-8, wherein the group of data to be quantized is a group of floating-point numbers in a neural network model, and the method further includes:

quantizing the group of data to be quantized using the selected pair of truncation thresholds to obtain quantized data, wherein the group of data to be quantized includes: setting a value that is greater than the truncation positive value in the group of data to be quantized as the truncation positive value, and setting a value that is less than the truncation negative value in the group of data to be quantized as the truncation negative value; and
inputting the obtained quantized data to the neural network model for processing.

10. An apparatus for processing data, comprising:

a data to be quantized obtaining unit configured to obtain a group of data to be quantized for a machine learning model;
a quantized data determining unit configured to quantize the group of data to be quantized to be quantized respectively by using a plurality of pairs of truncation thresholds to determine a plurality of groups of quantized data, wherein each pair of truncation thresholds in the plurality of pairs of truncation thresholds includes a truncation positive value and a truncation negative value that are symmetrical; and
a truncation threshold selecting unit configured to select a pair of truncation thresholds from the plurality of pairs of truncation thresholds based on a difference between a mean value of an absolute value of each group of quantized data in the plurality of groups of quantized data and a mean value of an absolute value of the group of data to be quantized to quantize the group of data to be quantized.

11. The apparatus of claim 10, wherein the quantized data determining unit includes:

a maximum absolute value determining unit configured to determine a maximum absolute value of all data in the group of data to be quantized; and
a plurality of pairs of truncation thresholds determining unit configured to determine the plurality of pairs of truncation thresholds based on the maximum absolute value.

12. The apparatus of claim 11, wherein the quantized data determining unit further includes:

a first truncation positive value determining unit, configured to determine a first truncation positive value based on the maximum absolute value, a predetermined total number of searches, and a current search order;

a first group of quantized data determining unit configured to quantize the group of data to be quantized through using a first pair of truncation thresholds to determine a first group of quantized data, wherein the first pair of truncation thresholds includes a first truncation positive value and a first truncation negative value that is opposite to the first truncation positive value; and

a first difference determining unit configured to determine a first difference between a mean value of an absolute value of the first group of quantized data and the mean value of the absolute value of the group of data to be quantized.

**13.** The apparatus of claim 12, wherein the quantized data determining unit further includes:

an incrementing unit configured to increment the current search order;

a second truncation positive value determining unit configured to determine a second truncation positive value based on the maximum absolute value, the predetermined total number of searches, and the current search order;

a second group of quantized data determining unit configured to quantize the group of data to be quantized by using a second pair of truncation thresholds to determine a second group of quantized data, wherein the second pair of truncation thresholds includes the second truncation positive value and a second truncation negative value that is opposite to the second truncation positive value; and

a second difference determining unit configured to determine a second difference between a mean value of an absolute value of the second group of quantized data and the mean value of the absolute value of the group of data to be quantized.

**14.** The apparatus of any one of claims 10-13, wherein the truncation threshold selecting unit includes:

a minimum difference determining unit configured to determine, from the plurality of groups of quantized data, a group of quantized data that has a smallest difference with the group of data to be quantized in terms of mean value of absolute value; and

a second truncation threshold selecting unit configured to select a pair of truncation thresholds corresponding to the group of quantized data from the plurality of pairs of truncation thresholds.

**15.** The apparatus of claim 14, further comprising:

a truncation search range determining unit configured to determine a truncation search range of associated with the selected pair of truncation thresholds;

a new plurality-of-pairs-of-truncation-thresholds determining unit configured to determine a plurality of new pairs of truncation thresholds within the truncation search range;

a second quantized data determining unit configured to quantize the group of data to be quantized respectively by using the plurality of new pairs of truncation thresholds to determine a plurality of new groups of quantized data; and

a third truncation threshold selecting unit configured to select a new pair of truncation thresholds based on a difference between the mean value of the absolute value of the group of data to be quantized and a mean value of an absolute value of each group of quantized data in the plurality of new groups of quantized data.

**16.** The apparatus of claim 10, wherein the quantized data determining unit includes:

a maximum absolute value determining unit configured to determine a maximum absolute value of all data in the group of data to be quantized;

a three-pairs-of-truncation-thresholds determining unit configured to determine three pairs of truncation thresholds based on the maximum absolute value, wherein among the three pairs of truncation thresholds, a first pair of truncation thresholds includes a half of the maximum absolute value and an opposite value of the half of the maximum absolute value, and a second pair of truncation thresholds includes three-quarters of the maximum absolute value and an opposite value of the three-quarters of the maximum absolute value, and a third pair of truncation thresholds includes the maximum absolute value and the opposite value of the maximum absolute value; and

a three-groups-of-quantized-data determining unit configured to quantize the group of data to be quantized respectively by using the three pairs of truncation thresholds to determine three groups of quantized data.

**17.** The apparatus of claim 16, wherein the truncation threshold selecting unit includes:

an iteration unit configured to execute the following actions iteratively until a stop condition is met:

selecting the pair of truncation thresholds from the three pairs of truncation thresholds;
determining whether a difference corresponding to the selected pair of truncation thresholds is less than a predetermined threshold;
stopping the iterative execution of the actions in response to the difference being less than the predetermined threshold; and
redetermining the three pairs of truncation thresholds in response to the difference being greater than the predetermined threshold based on the selected pair of truncation thresholds.

18. The method of any one of claims 10-17, wherein the group of data to be quantized is a group of floating-point numbers in a neural network model, and the apparatus further includes:

a data quantization unit, which is configured to quantize a group of data to be quantized using the selected pair of truncation thresholds to obtain quantized data, wherein the group of data to be quantized includes: setting a value that is greater than the truncation positive value in the group of data to be quantized as the truncation positive value, and setting a value that is less than the truncation negative value in the group of data to be quantized as the truncation negative value; and
a data input unit configured to input the obtained quantized data to the neural network model for processing.

19. A computer readable storage medium, on which a computer program is stored, and when the program is executed, the method of any one of claims 1-9 is realized.

20. An artificial intelligence chip, comprising the apparatus for processing data of any one of claims 10-18.

21. An electronic device, comprising the artificial intelligence chip of claim 20.

22. A board card, comprising a storage component, an interface apparatus, a control component, and the artificial intelligence chip of claim 20,

wherein the artificial intelligence chip is respectively connected to the storage component, the control component, and the interface apparatus;
the storage component is configured to store data;
the interface apparatus is configured to realize data transmission between the artificial intelligence chip and an external device; and
the control component is configured to monitor a state of the artificial intelligence chip.

23. The board card of claim 22, wherein

the storage component includes: a plurality of groups of storage units, wherein each group of storage units is connected to the artificial intelligence chip through a bus, and the storage units are DDR SDRAMs (double data rate synchronous dynamic random-access memory);
the artificial intelligence chip includes: a DDR controller configured to control data transfer and data storage of each storage unit; and
the interface apparatus is a standard PCIe interface.

**FIGURE 1-1**

**FIGURE 1-2**

1-300

1-320
Data
Quantization

1-330
Quantized data

1-340
Neural network model

1-350
Output result

1-310
Input data
(unquantized)

FIGURE 1-3

1-400

Data to be quantized

-|max|    0.0    |max|

Quantized data

-127    0    127

FIGURE 1-4A

1-450

1-460

Data to be quantized

-|T|    0.0    |T|

1-470

Quantized data

-127    0    127

FIGURE 1-4B

1-500

1-502

Obtain a group of data to be quantized for machine learning model

1-504

Quantize a group of data to be quantized respectively by using a plurality of pairs of truncation thresholds to determine a plurality of groups of quantized data

1-506

Select a pair of truncation thresholds from the plurality of pairs of truncation thresholds to quantize the group of data to be quantized based on a difference between a mean value of an absolute value of each group of quantized data in the plurality of groups of quantized data and a mean value of an absolute value of the group of the data to be quantized

**FIGURE 1-5**

1-600

Determine the mean value of the absolute value of the data to be quantized and the maximum absolute value in the data to be quantized, and initialize the mean difference and the search order
1-602

The search order i is less than the total number of searches?
1-604

NO → Exit the search process of the truncation threshold
1-618

YES
1-606

Determine a pair of truncation thresholds

1-608

Use this pair of truncation thresholds to quantize the data to be quantized to obtain the quantized data

1-610

Calculate the difference between the mean value of the absolute value of the quantized data and the absolute value of the data to be quantized

1-612

The calculated difference is less than the current minimum difference

NO

YES
1-614

Set the calculated difference as the current minimum difference, and recorded the truncation threshold when the difference is the smallest

1-616

Increment the search order i

## FIGURE 1-6

1-700

1-770

**FIGURE 1-7A**

1-750

1-778

1-770  1-772

**FIGURE 1-7B**

1-800

1-802

Determine three pairs of truncation thresholds

1-804

Select a pair of truncation thresholds from the three
pairs of truncation thresholds based on the difference
of the mean value of the absolute value of data
before and after the quantization

1-806

The minimum difference is less than the
predetermined threshold?

YES

1-810

Exit the iterative process of the truncation
threshold

NO

1-808

Redetermine the three pairs of truncation thresholds
based on the selected pair of truncation thresholds

**FIGURE 1-8**

1-900

Data to be quantized
obtaining unit — 1-910

Quantized data
determining unit — 1-920

Truncation threshold
determining unit — 1-930

**FIGURE 1-9**

FIGURE 1-10

2-100

Processing system

2-101-1

Processor

2-101-2

Processor

2-101-3

Processor

2-102

Memory

**FIGURE 2-1**

2-200

2-220

2-210

2-230

**FIGURE 2-2**

2-300

FIGURE 2-3

2-400

FIGURE 2-4A

2-450

FIGURE 2-4B

2-480

Data to be
quantized

min    0.0    max

Quantized data

0    255

**FIGURE 2-4C**

2-490

2-492

Data to be
quantized

min    0.0    T

Quantized data

0    255    2-495

**FIGURE 2-4D**

2-500

2-502

Obtain a group of data to be quantized for a machine learning model

2-504

Quantize a group of data to be quantized respectively by using a plurality of pairs of truncation thresholds to determine a plurality of groups of quantized data

2-506

Select a pair of truncation thresholds from the plurality of pairs of truncation thresholds to quantize the group of data to be quantized based on a difference between a mean value of an absolute value of each group of quantized data in the plurality of groups of quantized data and a mean value of an absolute value of the group of the data to be quantized

**FIGURE 2-5**

2-600

2-602

Determine the mean value of the absolute value of the data to be quantized and the maximum value and the minimum value of the data to be quantized, and initialize the mean difference and the search order $i$

2-604

The search order $i$ is less than the total number of searches?

NO

2-618

Exit the search process of the truncation threshold a pair of truncation thresholds

YES

2-606

Determine a pair of truncation thresholds

2-608

Quantize the data to be quantized by using this pair of truncation thresholds to obtain the quantized data

2-610

Calculate the difference between the mean value of the absolute value of the quantized data and the Mean value of the absolute value of the data to be quantized

2-612

The calculated difference is less than the current minimum difference?

NO

YES

2-614

Set the calculated difference as the current minimum difference, and record the truncation threshold when the difference is the smallest

2-616

Increment the search order $i$

**FIGURE 2-6**

2-700

2-770

**FIGURE 2-7A**

2-750

2-778

2-770  2-772

0

**FIGURE 2-7B**

2-800

2-802

Determine three pairs of truncation thresholds

2-804

Select a pair of truncation thresholds from the three pairs of truncation thresholds based on the difference of the mean value of the absolute value of data before and after the quantization

2-806

The minimum difference is less than the predetermined threshold?

YES

2-810

Exited the iterative process of the truncation threshold

NO

2-808

Redetermine the three pairs of truncation thresholds based on the selected pair of truncation thresholds

## FIGURE 2-8

2-900

Data to be quantized obtaining unit — 2-910

Quantized data determining unit — 2-920

Truncation threshold determining unit — 2-930

## FIGURE 2-9

**FIGURE 2-10**

FIGURE 3-1

3-200

```
                                                              ┌─ 3-202
┌──────────────────────────────────────────────────────┐
│   Obtain the plurality of pieces of data for the machine learning
│   model, and the plurality of pieces of data is represented in the first
│                        data format
└──────────────────────────────────────────────────────┘
                              │
                              ▼                               ┌─ 3-204
┌──────────────────────────────────────────────────────┐
│    Distribute the plurality of pieces of data in the first group of
│    intervals based on the values of the plurality of pieces of data,
│   where the number of the first group of intervals is predetermined
└──────────────────────────────────────────────────────┘
                              │
                              ▼                               ┌─ 3-206
┌──────────────────────────────────────────────────────┐
│  Determine the first average value of the plurality of pieces of data
└──────────────────────────────────────────────────────┘
                              │
                              ▼                               ┌─ 3-208
┌──────────────────────────────────────────────────────┐
│    Map the data distributed in the first group of intervals to the
│   second group of intervals according to the plurality of different
│    mapping units to determine the second average value of the
│    mapped data according to the corresponding mapping unit
└──────────────────────────────────────────────────────┘
                              │
                              ▼                               ┌─ 3-210
┌──────────────────────────────────────────────────────┐
│  Process the plurality of pieces of data based on the first average
│    value and the plurality of second average values, so that the
│   processed plurality of pieces of data is represented in the second
│                        data format
└──────────────────────────────────────────────────────┘
```

## FIGURE 3-2

3-300

3-302

Determine a plurality of differences related to the plurality of mapping units based on the first average value and the plurality of second average values

3-304

Determine the truncation threshold that used to plurality of pieces of data based on the plurality of differences

3-306

Truncate the obtained plurality of pieces of data based on the truncation threshold

3-308

Determine the scale value related to the mapping unit based on the truncation threshold

3-310

Scale the plurality of pieces of truncated data based on the scale value

FIGURE 3-3

3-400

—3-402

Obtaining unit

—3-404

Distribution unit

—3-406

First average value determining unit

—3-408

First mapping unit

—3-410

Execution unit

FIGURE 3-4

3-500

Board
card

3-502

Storage component

3-503-1

Storage
unit

3-503-N

Storage
unit

......

505

3-504

Control component

MCU

3-506-1

Chip

......

3-506-N

Chip

3-507

Interface
apparatus

3-501

External
device

FIGURE 3-5

## INTERNATIONAL SEARCH REPORT

| International application No. |
| --- |
| **PCT/CN2020/082610** |

| | |
| --- | --- |
| **A. CLASSIFICATION OF SUBJECT MATTER** | |
| G06N 3/04(2006.01)i; G06N 20/00(2019.01)i; G06N 3/063(2006.01)i | |
| According to International Patent Classification (IPC) or to both national classification and IPC | |

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, CNKI, WPI, EPODOC: 量化, 对称, 绝对值, 最大值, 阈值, 截断阈值, 正, 负, 差异, 相似, 多, quantiz+, absolute, value, maximum, positive, multi+, threshold

**C. DOCUMENTS CONSIDERED TO BE RELEVANT**

| Category* | Citation of document, with indication, where appropriate, of the relevant passages | Relevant to claim No. |
| --- | --- | --- |
| X | CN 109993296 A (CAMBRICON TECHNOLOGIES CO., LTD.) 09 July 2019 (2019-07-09) description paragraphs [0062]-[0090], [0202]-[0217] | 1-2, 5, 10-11, 14, 19-23 |
| A | CN 110020616 A (DEEPBLUE TECHNOLOGY (SHANGHAI) CO., LTD.) 16 July 2019 (2019-07-16) entire document | 1-23 |
| A | CN 110008952 A (DEEPBLUE TECHNOLOGY (SHANGHAI) CO., LTD.) 12 July 2019 (2019-07-12) entire document | 1-23 |
| A | US 6704757 B1 (OHMI, Tadahiro et al.) 09 March 2004 (2004-03-09) entire document | 1-23 |

| ☐ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 June 2020** | **30 June 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/082610**

| Patent document cited in search report | | | Publication date (day/month/year) | Patent family member(s) | | | Publication date (day/month/year) |
|---|---|---|---|---|---|---|---|
| CN | 109993296 | A | 09 July 2019 | None | | | |
| CN | 110020616 | A | 16 July 2019 | None | | | |
| CN | 110008952 | A | 12 July 2019 | None | | | |
| US | 6704757 | B1 | 09 March 2004 | WO | 9954840 | A1 | 28 October 1999 |
| | | | | EP | 1118954 | A1 | 25 July 2001 |
| | | | | JP | H11306268 | A | 05 November 1999 |

Form PCT/ISA/210 (patent family annex) (January 2015)